# EUROPÄISCHE PATENTSCHRIFT

(11) **EP 2 962 439 B1**
(45) Veröffentlichungstag und Bekanntmachung des Hinweises auf die Patenterteilung: **30.08.2017**
(21) Anmeldenummer: 14707962.8
(22) Anmeldetag: 19.02.2014
(51) Int. Cl.: H04L 29/06, H04L 9/08, H04L 9/30, H04L 9/32, H04W 12/06, G06F 21/31, G06F 21/35, G06F 21/43

(54) **LESEN EINES ATTRIBUTS AUS EINEM ID-TOKEN**
READING AN ATTRIBUTE FROM AN ID TOKEN
LECTURE D'UN ATTRIBUT ENREGISTRÉ DANS UN JETON ID

(30) Priorität: 27.02.2013 DE 102013203257
(43) Veröffentlichungstag der Anmeldung: 06.01.2016
(73) Patentinhaber: Bundesdruckerei GmbH, 10969 Berlin (DE)
(72) Erfinder: MORGNER, Frank, 15537 Grünheide (DE)
(74) Vertreter: Richardt Patentanwälte PartG mbB
(86) Internationale Anmeldenummer: PCT/EP2014/053249
(87) Internationale Veröffentlichungsnummer: WO 2014/131675

(56) Entgegenhaltungen:
- WO-A1-2010/048350
- DE-A1-102008 040 416
- LISHOY FRANCIS ET AL: "A Security Framework Model with Communication Protocol Translator Interface for Enhancing NFC Transactions", TELECOMMUNICATIONS (AICT), 2010 SIXTH ADVANCED INTERNATIONAL CONFERENCE ON, IEEE, PISCATAWAY, NJ, USA, 9. Mai 2010 (2010-05-09), Seiten 452-461, XP031693074, ISBN: 978-1-4244-6748-8

## Beschreibung

Die Erfindung betrifft ein Verfahren zum Lesen von zumindest einem Attribut aus einem ID-Token sowie ein entsprechendes Terminal und Computerprogrammprodukt.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität manipulieren kann.

Zur Terminalauthentifizierung bzw. zur Etablierung eines sicheren Datenübertragungskanals zwischen einem ID-Token und einem Computersystem finden verschiedene Protokolle wie z.B. PACE ("Password Authenticated Connection Establishment") oder EAC ("Extended Access Control") Verwendung. Die Protokolle sollen sicherstellen, dass der Nutzer seine Zustimmung zum Auslesen von Attributen aus dem ID-Token durch das Computersystem gegeben hat und dass das Dokument auch physisch in einem bestimmten Bereich befindet, z.B. dem Empfangsbereich der NFC Schnittstelle eines Kartenleseterminals. Nachteilig an den derzeit verwendeten Protokollen ist, dass sie rechenaufwendig sind und dass deren Laufzeit für sehr zeitkritische Anwendungen oftmals zu lang ist. Insbesondere die Durchführung kryptographischer Operationen und ein oder mehrerer Anfrage-Antwort Zyklen zur Etablierung des Datenübertragungskanals erfordern Zeit zur Berechnung von Schlüsseln und zum Austausch von Daten.

Der Erfindung liegt demgegenüber die Aufgabe zugrunde, ein verbessertes Verfahren zum Lesen zumindest eines Attributs zu schaffen, sowie ein entsprechendes Terminal und Computerprogrammprodukt.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Sofern nicht ausdrücklich Gegenteiliges zum Ausdruck gebracht wird, können Ausführungsformen der Erfindung frei miteinander kombiniert werden.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung von zumindest einem Attributs integriert ist.

Unter einem "Attribut" wird im Folgenden ein Datenwert, z.B. eine Zahl, oder ein Text, verstanden. Bei dem Attribut kann es sich um eine Angabe bezüglich der Identität eines Nutzers handeln, dem der ID-Token zugeordnet ist, insbesondere bezüglich dessen so genannter digitaler Identität. Beispielsweise können Name, Vorname, Adresse des Nutzers Attribute darstellen. Ein Attribut kann auch Daten beinhalten, die zur Überprüfung der Berechtigung des Benutzers zur Inanspruchnahme eines bestimmten Online-Dienstes dienen, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Unter einem "ID-Provider-Computer" ist ein Datenverarbeitungssystem einer Instanz zu verstehen, welches Authentifizierungsdienste anbietet. Insbesondere kann es sich bei dieser Instanz um eine staatliche Behörde handeln und bei dem Authentifizierungsdienst um den automatischen Nachweis der digitalen Identität eines Nutzers bzw. der Gültigkeit personenbezogener Attribute des Nutzers. Nach einer Ausführungsform der Erfindung handelt es sich bei dem ID-Provider-Computer um ein behördlich zertifiziertes Trust-Center, insbesondere ein Signaturgesetzkonformes Trust-Center.

Ein "Secure Element (SE)" ist ein manipulationssicherer Smart Card Chip, der eine Laufzeitumgebung für Chipkarten-Anwendungen (so genannte Applets oder Cardlets) bereitstellt. Der Chip kann hardwarebasierte Funktionen bereitstellen, insbesondere in Form von kryptografischen Co-Prozessoren zur Umsetzung von sicherheitsbezogenen Algorithmen wie DES, AES und RSA.

Unter einem "statischen" Schlüssel bzw. Datenwert wird im Folgenden ein kryptographischer Schlüssel bzw. Datenwert verstanden, welcher in einem nicht-flüchtigen Speichermedium gespeichert ist und für mehr als nur eine Sitzung Verwendung findet oder finden kann. Im Gegensatz dazu werden Sitzungsschlüssel bzw. sitzungsgebundene, temporäre Schlüssel bzw. Datenwerte nur für eine Sitzung generiert und nicht permanent gespeichert, so dass sie in einer weiteren Sitzung nicht mehr verwendet werden können.

Unter einem "Zero-Knowledge-Authentifizierungsprotokoll" wird hier jedes Verfahren verstanden, bei dem ein zu überprüfendes Geheimnis nicht von einem ersten Teilnehmer, z.B. einem Terminal, an einen zweiten Teilnehmer, z.B. ein ID-Token, zur Authentifizierung des ersten gegenüber dem zweiten Teilnehmer übertragen werden muss, um das Geheimnis mit einem dem zweiten Teilnehmer als Referenzwert bekannten Geheimnis zu vergleichen, sondern bei welchem die Authentifizierung mittels Protokolls erfolgt, das sowohl den ersten und den zweiten Teilnehmer involviert. Entsprechende Protokolle sind an sich aus dem Stand der Technik bekannt, wie zum Beispiel Strong Password Only Authentication Key Exchange (SPEKE), Diffie-Hellman Encrypted Key Exchange (DH-EKE), Bellovin-Merritt Protokoll oder Password Authenticated Connection Establishment (PACE). Das SPEKE-Protokoll ist beispielsweise bekannt aus www.jablon.org/speke97.html, US 6,792,533 B2 und US 7,139,917 B2. Unter anderem ebenfalls aus www.jablon.org/speke97.html ist das DH-EKE-Protokoll bekannt. Unter anderem aus US 5,241,599 ist das Bellovin-Merritt-Protokoll bekannt. Aus BSI TR-03110 sowie Bender, Fischlin und Kügler 2009 "Security Analysis of the PACE-Agreement Protocol" (Lecture Notes in Computer Science Volume 5735, Seiten 33-48) ist das PACE-Protokoll bekannt, welches sich besonders für elliptische Kurven-Kryptographie eignet. Sowohl DE 10 2008 040 416 A1 als auch WO 2010/048350 A1 zeigt ein Verfahren zum Lesen eines Attributes von einem ID-Token mit kontaktlosen und kontaktbehafteten Schnittstellen.

In einem Aspekt betrifft die Erfindung ein Verfahren zum Lesen zumindest eines in einem ID-Token gespeicherten Attributs. Der ID-Token ist einem Nutzer zugeordnet. Das Verfahren umfasst:
- Feststellung durch ein Terminal, ob eine kontaktbehaftete Schnittstelle des ID-Tokens vorhanden und zum Datenaustauschmit dem Terminal einsetzbar ist. Falls der ID-Token die kontaktbehaftete Schnittstelle nicht besitzt oder diese nicht einsetzbar ist, erfolgt die Durchführung der folgenden Schritte:
   - Durchführung eines Zero-Knowledge-Authentifizierungsprotokolls über eine kontaktlose Schnittstelle von Terminal und ID-Token zum Beweis gegenüber dem ID-Token, dass das Terminal im Besitz eines statischen Geheimnisses ist, ohne dieses statische Geheimnis an den ID-Token zu übermitteln; das statische Geheimnis ist ein zwischen dem Nutzer und dem ID-Token geteiltes Geheimnis, z.B. eine PIN, die in dem ID-Token sicher gespeichert ist; das Geheimnis kann auch in einer auf einem den ID-Token enthaltenden Dokument aufgedruckte Kartennummer, die Nummer in einer MRZ (machine readable zone) des Dokuments oder etwas ähnliches sein; die Durchführung umfasst eine Erzeugung eines ersten öffentlichen kryptographischen Schlüssels durch den ID-Token und die Authentifizierung des Nutzers gegenüber dem ID-Token über die kontaktlose Schnittstelle; und
   - Ableiten einer ID-Token-Kennung durch das Terminal aus dem ersten öffentlichen kryptographischen Schlüssel. Der Begriff "Ableitung" umfasst neben der Ableitung eines veränderten Wertes mit einer Ableitungsfunktion auch die Verwendung des ersten öffentlichen kryptographischen Schlüssels in unveränderter Form als die ID-Token-Kennung.

Falls der ID-Token die kontaktbehaftete Schnittstelle besitzt und diese einsetzbar ist, erfolgt eine Authentifizierung des Nutzers gegenüber dem ID-Token durch Übertragung des statischen Geheimnisses, z.B. einer PIN, einer CAN oder eines biometrischen Merkmals des Nutzers vom Terminal an den ID-Token über die kontaktbehaftete Schnittstelle. Außerdem erfolgt in diesem Fall ein Zugriff auf eine ID-Token-Kennung durch das Terminal.

Der Zugriff umfasst:
∘ Lesen eines Datenwertes, der bereits vor der Feststellung auf einem Speicher des Terminals gespeichert vorlag, von diesem Speicher, wobei der Datenwert vor der Feststellung auch auf einem Speicher des ID-Tokens gespeichert vorliegt, und Verwenden des Datenwertes als die ID-Token-Kennung durch das Terminal und durch den ID-Token; oder
∘ In Antwort auf die Feststellung, Generierung eines Datenwertes durch das Terminal, Übermittlung des Datenwertes vom Terminal an den ID-Token und Verwenden des generierten Datenwertes als die ID-Token-Kennung durch das Terminal und durch den ID-Token; oder
∘ Generierung eines Datenwertes durch den ID-Token, Übermittlung des Datenwertes vom ID-Token an das Terminal und Verwenden des generierten Datenwertes als die ID-Token-Kennung durch das Terminal und durch den ID-Token.

Das Verfahren umfasst ferner:
- Senden der ID-Token-Kennung vom Terminal an einen ID-Provider-Computer;
- Verwenden der ID-Token-Kennung durch den ID-Provider-Computer zur Authentifizierung des ID-Provider-Computers gegenüber dem ID-Token;
- nach erfolgreicher Authentifizierung des Nutzers und des ID-Provider-Computers gegenüber dem ID-Token, Lesezugriff des ID-Provider-Computers auf das zumindest eine in dem ID-Token gespeicherte Attribut zur Übertragung des zumindest einen Attributs nach dessen Signierung an einen weiteren Computer.

Der Begriff "ID-Token-Kennung" bezeichnet einen Wert, welcher die Funktion hat, dem ID-Provider-Computer eine Authentifizierung gegenüber dem ID-Token zu ermöglichen. Eine ID-Token Kennung kann einem ID-Token z.B. dadurch zugewiesen sein, dass sie in diesem permanent gespeichert ist oder von diesem generiert wird, wobei das ID-Token eine Funktion umfasst, einen ID-Provider-Computer, welcher nachweisen kann, die ID-Token-Kennung zu kennen, als vertrauenswürdig angesehen wird. Nach Ausführungsformen kann eine Verwendung einer ID-Token-Kennung durch das Terminal und durch den ID-Token darin bestehen, dass das Terminal die ID-Token-Kennung von dem ID-Token ausliest oder anderweitig empfängt und an den ID-Provider-Computer weiterleitet, so dass dieser sich gegenüber dem ID-Token authentifizieren kann.

Das Verfahren kann vorteilhaft sein, da durch den Feststellungsschritt das in zeitlicher und prozessualer Hinsicht oftmals teure Zero-Knowledge-Authentifizierungsprotokoll bei Verfügbarkeit einer kontaktbehafteten Schnittstelle vermieden werden kann. Das Verfahren kann somit erheblich beschleunigt werden, ohne die Sicherheit zu reduzieren, da eine kontaktbehaftete Schnittstelle als hinreichend vertrauenswürdig angesehen werden kann.

In einem weiteren vorteilhaften Aspekt kann die Generierung und den Austausch bzw. durch die beidseitige Vorab-Speicherung einer ID-Token-Kennung vorteilhaft sein, weil dadurch eine ID-Token-Kennung unabhängig von der Durchführung des Zero-Knowledge-Authentifizierungsprotokolls bereitgestellt wird. Somit können auch für den Fall, dass die kontaktbehaftete Schnittstelle zur Terminalauthentifizierung gegenüber dem ID-Token verwendet wird, existierende Schnittstellen gängiger ID-Token, welche eigentlich eine Verwendung eines im Zuge des Zero-Knowledge-Authentifizierungsprotokolls generierten ID-Token-Kennung zur anschließenden Authentifizierung eines ID-Provider-Computers gegenüber dem ID-Token vorsehen, verwendet werden. Die Entwicklung bzw. Verwendung von neuen, speziell an eine kontaktbehaftete Terminalauthentifizierung angepassten ID-Token mit entsprechenden Schnittstellen kann also entfallen.

In einem weiteren vorteilhaften Aspekt können auch Schnittstellen und Protokolle, die auf Seiten des ID-Provider-Computers implementiert sind um sich gegenüber dem ID-Token zu authentifizieren, beibehalten und verwendet werden unabhängig davon, ob sich das Terminal nun mittels einer kontaktlosen oder kontaktbehafteten Schnittstelle gegenüber dem ID-Token authentifiziert.

In einem weiteren vorteilhaften Aspekt kann das Verfahren eine medienbruchfreie und rechtssichere Bereitstellung der in dem ID-Token gespeicherten Attribute erlauben, zum Beispiel für E-Commerce und E-Government-Anwendungen. Dies wird insbesondere aufgrund des durch die Authentifizierung des Nutzers und des ID-Provider-Computers gegenüber dem ID-Token gebildeten Vertrauensankers ermöglicht. Von besonderem Vorteil ist ferner, dass eine zentrale Speicherung der Attribute verschiedener Nutzer nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers zur Inanspruchnahme des ID-Provider-Computers nicht erforderlich ist.

Vorzugsweise erfolgt die Feststellung durch das Terminal, ob eine kontaktbehaftete Schnittstelle vorhanden und einsatzbereit ist, völlig automatisch, z.B. durch Senden einer Challenge über eine kontaktbehaftete Schnittstelle des Terminals an das ID-Token. Bei Ausbleiben einer Antwort erfolgt die Feststellung, dass das ID-Token nicht über eine einsatzbereite kontaktbehaftete Schnittstelle für den Datenaustausch verfügt.

Nach Ausführungsformen wird im Falle der Nutzung der kontaktbehafteten Schnittstelle das statische Geheimnis, das z.B. vom Nutzer manuell über eine Tastatur des Terminals eingegeben wurde, in unverschlüsselter Form vom Terminal an den ID-Token zum Zwecke der Nutzerauthentifikation übertragen. Eine kontaktbehaftete Schnittstelle kann als hinreichend vertrauenswürdig angesehen werden, so dass durch den Verzicht auf eine Verschlüsselung das Verfahren weiter beschleunigt werden kann.

Nach Ausführungsformen umfasst die Durchführung des Zero-Knowledge-Authentifizierungsprotokolls:
- Erste Durchführung eines Diffie-Hellman Schlüsselaustausches unter Verwendung des statischen Geheimnis durch den ID-Token und durch das Terminal zur Generierung eines ersten geteilten temporären Basispunktes;
- Zweite Durchführung eines Diffie-Hellman Schlüsselaustausches unter Verwendung des ersten geteilten temporären Basispunktes, wobei die zweite Durchführung die Erzeugung des ersten öffentlichen kryptographischen Schlüssels und eines zweiten öffentlichen kryptographischen Schlüssel unter Einbeziehung des statischen Geheimnisses und den Austausch der ersten und zweiten öffentlichen kryptographischen Schlüssel zwischen Terminal und ID-Token umfasst;
- Aufbau eines sicheren ersten Datenübertragungskanals zwischen ID-Token und Terminal unter Verwendung der ersten und zweiten öffentlichen kryptographischen Schlüssel;
- Ableitung eines Authentifizierungsschlüssels von dem ersten öffentlichen kryptographischen Schlüssel durch das Terminal; und
- Verwenden des Authentifizierungsschlüssels durch das Terminal zur Authentifizierung des Nutzers gegenüber dem ID-Token über die erste geschützte Verbindung.

Nach Ausführungsformen sind die ersten und zweiten öffentlichen kryptographischen Schlüssel sitzungsgebundene Schlüssel. Dies bedeutet, dass die Schlüssel bei Start einer Sitzung, z.B. wenn ein Nutzer seine Authentifizierung gegenüber dem ID-Token einleitet, wie oben beschrieben generiert werden, und nach Beendigung der Sitzung, z.B. nach erfolgreichem Auslesen des zumindest einen Attributs, wieder gelöscht werden. Dies kann die Sicherheit des Verfahrens weiter erhöhen.

Nach Ausführungsformen umfasst die Durchführung des Zero-Knowledge-Authentifizierungsprotokolls:
- Übertragung von Domänenparametern, welche eine elliptische Kurve festlegen, von dem ID-Token zum Terminal, wobei die Domänenparameter einen statischen Basispunkt der elliptischen Kurve beinhalten;
- Generierung eines Zufallswertes durch den ID-Token;
- Verschlüsselung des Zufallswertes mit Hilfe des in dem ID-Token gespeicherten statischen Geheimnis unter Erzeugung eines verschlüsselten Zufallswertes;
- Übertragung des verschlüsselten Zufallswertes von dem ID-Token an das Terminal;
- Verwendung des durch den Nutzer über das Terminal eingegebenen statischen Geheimnisses zur Entschlüsselung des verschlüsselten Zufallswertes zur Rekonstruktion des Zufallswertes durch das Terminal;

Die Durchführung des Zero-Knowledge-Authentifizierungsprotokolls umfasst ferner:
- Generierung eines ersten privaten Token-Schlüssels durch den ID-Token;
- Ableitung eines ersten öffentlichen Token-Schlüssels aus dem ersten privaten Token-Schlüssel und dem Basispunkt durch den ID-Token, wobei der erste private und der erste öffentliche Token-Schlüssel ein asymmetrisches kryptographisches Schlüsselpaar bilden;
- Übertragung des ersten öffentlichen Token-Schlüssels von dem ID-Token an das Terminal im Zuge des ersten Diffie-Hellman-Schlüsselaustauschs;
- Generierung eines ersten privaten Terminal-Schlüssels durch das Terminal;
- Ableitung eines ersten öffentlichen Terminal-Schlüssels aus dem ersten privaten Terminal-Schlüssel und dem statischen Basispunkt durch das Terminal, wobei der erste private Terminal-Schlüssel und der erste öffentliche Terminal-Schlüssel ein asymmetrisches kryptographisches Schlüsselpaar bilden;
- Übertragung des ersten öffentlichen Terminal-Schlüssels von dem Terminal an den ID-Token im Zuge des ersten Diffie-Hellman-Schlüsselaustauschs;
- Berechnung eines Blindingpunktes aus dem ersten privaten Terminal-Schlüssel und dem ersten öffentlichen Token-Schlüssel durch das Terminal; und
- Berechnung des ersten geteilten temporären Basispunktes aus dem Zufallswert, dem statischen Basispunkt und dem Blindingpunkt durch das Terminal;
- Berechnung des Blindingpunktes aus dem ersten privaten Token-Schlüssel und dem ersten öffentlichen Terminal-Schlüssel durch den ID-Token;
- Berechnung des ersten geteilten temporären Basispunktes aus dem Zufallswert, dem statischen Basispunkt und dem Blindingpunkt durch den ID-Token.

Die Durchführung des Zero-Knowledge-Authentifizierungsprotokolls umfasst ferner:
- Generierung eines zweiten privaten Terminal-Schlüssels durch das Terminal;
- Ableitung eines zweiten öffentlichen Terminal-Schlüssels aus dem zweiten privaten Terminal-Schlüssel und aus dem ersten geteilten temporären Basispunkt durch das Terminal, wobei der zweite private Terminal-Schlüssel und der zweite öffentliche Terminal-Schlüssel zusammen ein asymmetrisches kryptographisches Schlüsselpaar bilden;
- Übertragung des zweiten öffentlichen Terminal-Schlüssels von dem Terminal an den ID-Token im Zuge des zweiten Diffie-Hellman Schlüsselaustauschs;
- Generierung eines zweiten privaten Token-Schlüssels durch den ID-Token;
- Ableitung eines zweiten öffentlichen Token-Schlüssels aus dem zweiten privaten Token-Schlüssel und dem ersten geteilten temporären Basispunkt durch den ID-Token, wobei der zweite öffentliche Token-Schlüssel und der zweite private Token-Schlüssel zusammen ein asymmetrisches kryptographisches Schlüsselpaar bilden;
- Übertragung des zweiten öffentlichen Token-Schlüssels von dem ID-Token an das Terminal, wobei der zweite öffentliche Token-Schlüssel als der erste öffentliche Schlüssel dient, der als ID-Token-Kennung verwendet wird.

Die Durchführung der Zero-Knowledge-Authentifizierung umfasst ferner:
- Berechnung eines Sitzungsschlüssels aus dem zweiten öffentlichen Token-Schlüssel und dem zweiten öffentlichen Terminalschlüssel jeweils durch das Terminal und den ID-Token;
- Berechnung des Authentifizierungsschlüssels aus dem Sitzungsschlüssel jeweils durch das Terminal und den ID-Token;
- Verwenden des Sitzungsschlüssel jeweils durch das Terminal und der ID-Token zum Aufbau der ersten geschützten Verbindung; und
- Verwendung des Authentifizierungsschlüssels zur Authentifizierung des Terminals gegenüber dem ID-Token. Z.B. kann aus dem Authentifizierungsschlüssel ein Authentifizierungswert abgeleitet werden, der vom Terminal an den ID-Token übertragen und dort mit einem ID-Token-seitig berechneten Authentifizierungswert verglichen werden. Alternativ dazu kann der Authentifizierungsschlüssel übertragen und mit dem als Referenz durch das ID-Token berechneten Authentifizierungsschlüssel verglichen werden.

Nach Ausführungsformen erfolgt die Authentifizierung des ID-Provider-Computers gegenüber dem ID-Token mit Hilfe eines Zertifikats des ID-Provider-Computers. Das Zertifikat beinhaltet eine Angabe derjenigen in dem ID-Token gespeicherten Attribute, für welche der ID-Provider-Computer für den Lesezugriff berechtigt ist. Der ID-Token prüft anhand dieses Zertifikats, ob der ID-Provider-Computer die erforderliche Leseberechtigung für den Lesezugriff auf ein bestimmtes Attribut hat, bevor ein solcher Lesezugriff durchgeführt werden kann.

Nach Ausführungsformen umfasst die Authentifizierung des ID-Provider-Computers gegenüber dem ID-Token:
- Senden eines Zertifikats des ID-Provider-Computers, welches einen statischen öffentlichen Schlüssel des ID-Provider-Computers enthält, von dem ID-Provider-Computer über das Terminal an den ID-Token;
- Verifikation des Zertifikats durch den ID-Token; dies kann z.B. mittels einer Zertifikatskettenprüfung erfolgen;
- Generierung eines Prüfwertes, vorzugsweise eines Zufallswertes, durch den ID-Token;
- Senden des Prüfwertes von dem ID-Token an den ID-Provider-Computer über das Terminal;
- Erzeugung eines Zwischenwertes, welcher zumindest von dem Prüfwert und von der ID-Token-Kennung abgeleitet ist, durch den ID-Provider-Computer;
- Signieren des Zwischenwertes mit einem statischen privaten kryptographischen Schlüssel des ID-Provider-Computers zur Generierung eines signierten Wertes, wobei der statische private Schlüssel mit dem statischen öffentlichen Schlüssel des Zertifikats ein asymmetrisches kryptographisches Schlüsselpaar bildet;
- Übermittlung des signierten Wertes vom ID-Provider-Computer über das Terminal an den ID-Token;
- Signaturprüfung des signierten Wertes durch den ID-Token mit Hilfe des statischen öffentlichen Schlüssels des Zertifikates.

Nach Ausführungsformen umfasst das Verfahren ferner:
- Berechnung eines komprimierten Wertes aus der ID-Token-Kennung durch den ID-Provider-Computer; und
- Konkatenierung des komprimierten Wertes mit dem Prüfwert und der ID-Token-Kennung zur Erzeugung des Zwischenwertes.

Die Signaturprüfung kann auch eine ID-Tokenseitige Berechnung des komprimierten Wertes aus der ID-Token-Kennung und eine ID-Tokenseitige Berechnung des Zwischenwertes umfassen. Die Überprüfung der Signatur umfasst eine Prüfung, ob der vom ID-Token berechnete komprimierte Wert bzw. Zwischenwert identisch ist mit dem signierten Zwischenwert des ID-Provider-Computers. Dies kann die Sicherheit weiter erhöhen, da auch die Komprimierungsfunktion von ID-Token und ID-Provider-Computer übereinstimmen muss.

Nach Ausführungsformen erfolgt nach einer erfolgreichen Authentifizierung des ID-Provider-Computers gegenüber dem ID-Token ein Aufbau einer sicheren Verbindung zwischen dem ID-Provider-Computer und dem ID-Token über das Terminal, wobei die geschützte Verbindung auf einer Ende-zu-Ende Verschlüsselung beruht (und im Folgenden als "Ende-zu-Ende Verbindung" bezeichnet wird), und wobei das zumindest eine Attribut über die geschützte Verbindung vom ID-Token ausgelesen und an den ID-Provider-Computer übertragen wird. Nach anderen Ausführungsformen kann eine gegenseitige Authentifizierung des ID-Provider-Computers und des ID-Tokens zum Aufbau der Ende-zu-Ende Verbindung erforderlich sein. So kann sich zum Beispiel das ID-Token gegenüber dem ID-Provider-Computersystem dadurch authentifizieren, dass der ID-Token z.B. im Zuge seiner Personalisierung ein privater Schlüssel, hier als privater CA-Schlüssel bezeichnet, und öffentlicher Schlüssel, hier als öffentlicher CA Schlüssel bezeichnet, in einem Speicher des ID-Tokens gespeichert werden. Privater und öffentlicher CA Schlüssel bilden ein asymmetrisches Schlüsselpaar (CA Schlüsselpaar). Das CA Schlüsselpaar wird von einer Zertifizierungsstelle, die der Betreiber des ID Provider Computers als vertrauenswürdig anerkennt, bereitgestellt, wobei der öffentliche CA Schlüssel Bestandteil eines von der Zertifizierungsstelle ausgestellten Zertifikats ist. Der ID-Token erzeugt mit dem privaten CA Schlüssel eine Signatur eines Datenwerts und der ID-Provider-Computer greift auf den öffentlichen CA Schlüssel des ID-Tokens zu um mit diesem die besagte Signatur zu verifizieren. Der öffentliche CA Schlüssel kann aufgrund des Zertifikats auf seine Herkunft und Echtheit geprüft werden. Mit erfolgreicher Signaturprüfung hat sich somit der ID-Token gegenüber dem ID-Provider Computer authentifiziert.
Nach weiteren Ausführungsformen erfolgt zunächst ein Aufbau einer Ende-zu-Ende Verbindung zwischen dem ID-Token und dem ID-Provider Computersystem und die gegenseitige Authentifizierung des ID-Provider-Computers und des ID-Tokens erfolgt über die Ende-zu-Ende Verbindung.

Nach Ausführungsformen handelt es sich bei dem ID-Token um ein Sicherheitselement (SE), welches in ein mobiles Telekommunikationsgerät integriert ist. Die durch das Terminal ausgeführten Verfahrensschritte werden durch ein auf einem Prozessor des Mobilfunkgerätes ausgeführtes Applikationsprogramm durchgeführt.

Nach Ausführungsformen handelt es sich bei dem statischen Geheimnis um eine PIN, eine CAN, ein Passwort oder ein biometrisches Merkmal des Nutzers.

Nach Ausführungsformen ist der ID-Token integraler Bestandteil eines Dokumentes. Das Dokument verfügt über ein integriertes PIN-Pad und einen Chip, welcher als Terminal dient.
Der ID-Token kann auch integraler Bestandteil eines Mobilfunkgerätes, das über eine integrierte Tastatur verfügt, sein, wobei eine auf dem Prozessor des Mobilfunkgeräts ausgeführte Applikation, die mit dem ID-Token interoperabel ist, als Terminal dient. Der ID-Token kann als Sicherheitselement ausgebildet sein.

Das Verfahren kann ferner umfassen:
- Empfang des statischen Geheimnisses durch den ID-Token; das statische Geheimnis kann dabei als ein manuell über die Tastatur oder über das PIN-Pad von dem Nutzer eingegebener Wert empfangen werden; Die Übertragung des eingegebenen Wertes an den ID-Token kann z.B. über einen nicht kryptographisch geschützten Datenübertragungsverbindung basierend auf der kontaktbehafteten Schnittstelle zwischen dem zur Eingabe verwendeten Terminal (z.B. Mobilfunkgerät, Dokumentenchip) mit Nutzer-Schnittstelle und dem ID-Token erfolgen; vorzugsweise erfolgt die Übertragung des eingegebenen Geheimnisses an den ID-Token im Klartext und unverschlüsselt, was das Verfahren beschleunigen kann;
- Vergleich des manuell eingegebenen statischen Geheimnisses durch den ID-Token mit einem in dem ID-Token gespeicherten Referenzwert des statischen Geheimnisses zur Authentifizierung des Nutzers.

Nach einer alternativen Ausführungsform ist der ID-Token ebenfalls als integraler Bestandteil eines Dokumentes ausgebildet. Das Dokument verfügt ebenfalls über ein integriertes PIN-Pad und über einen als Terminal dienenden Chip mit integriertem Speicher. Das statische Geheimnis wird hier aber nicht manuell eingegeben, sondern ist in dem Speicher des Chips bereits gespeichert.

Nach einer weiteren alternativen Ausführungsform ist der ID-Token integraler Bestandteil eines Mobilfunkgerätes. Das Mobilfunkgerät beinhaltet eine integrierte Tastatur und einen integrierten Speicher in dem das statische Geheimnis gespeichert ist. Eine auf dem Prozessor des Mobilfunkgeräts ausgeführte Applikation, die mit dem ID-Token interoperabel ist, dient als Terminal.

Bei Ausführungsformen, bei welchen das statische Geheimnis bereits in einem Speicher des Terminals gespeichert vorliegt wenn der Feststellungsschritt durchgeführt wird, kann das Verfahren ferner umfassen:
- Anzeigen des in dem integrierten Speicher gespeicherten statischen Geheimnisses und/oder einer Bestätigungsanfrage über eine Anzeigevorrichtung;
- Empfang eines Bestätigungssignals des Nutzers durch das Terminal, dass das gespeicherte statische Geheimnis vom Terminal an den ID-Token übertragen werden soll;
- Im Falle des Empfangs des Bestätigungssignals, Durchführung der Übertragung des statischen Geheimnisses über die kontaktbehaftete Schnittstelle an den ID-Token.

Dies kann das Gesamtverfahren weiter beschleunigen, da der Nutzer nun nicht mehr ein - potentiell komplexes - Passwort eingeben muss, sondern nur dessen Übermittlung an den ID-Token bestätigen muss.

In einem weiteren Aspekt betrifft die Erfindung ein Terminal. Das Terminal ist mit einem Datenspeicher operativ gekoppelt und besitzt Mittel zum Empfang eines von einem Nutzer eines ID-Tokens manuell eingegebenen statischen Geheimnisses, z.B. eine Tastatur oder ein Pin-Pad. Zusätzlich oder alternativ dazu besitzt das Terminal Mittel zum Lesen des Geheimnisses von dem Datenspeicher. Das Terminal besitzt ferner eine kontaktlose und eine kontaktbehaftete Schnittstelle zum Datenaustausch mit einem ID-Token. Dies bedeutet, dass der Datenspeicher Bestandteil des Terminals ist oder mit diesem über ein Netzwerk verbunden ist und dass das Terminal zumindest lesend auf die Daten dieses Datenspeichers zugreifen kann. Das Terminal besitzt außerdem Mittel zur Feststellung, ob eine kontaktbehaftete Schnittstelle des ID-Tokens vorhanden und zum Datenaustauschmit dem Terminal einsetzbar ist und Mittel zur Authentifizierung des Nutzers gegenüber dem ID-Token, z.B. eine Mensch-Maschine Schnittstelle zur Eingabe von Passwörtern, biometrischen Daten, etc.

Das Terminal ist dazu ausgebildet, im Falle der Feststellung, dass der ID-Token die kontaktbehaftete Schnittstelle nicht besitzt oder diese nicht einsetzbar ist, folgende Schritte auszuführen:
- Durchführung eines Zero-Knowledge-Authentifizierungsprotokolls über eine kontaktlose Schnittstelle von Terminal und ID-Token zum Beweis gegenüber dem ID-Token, dass das Terminal im Besitz des statischen Geheimnisses ist, ohne dieses statische Geheimnis an den ID-Token zu übermitteln; das statische Geheimnis ist ein zwischen dem Nutzer und dem ID-Token geteiltes Geheimnis; die Durchführung des Zero-Knowledge-Authentifizierungsprotokolls umfasst eine Erzeugung eines ersten öffentlichen kryptographischen Schlüssels durch den ID-Token und die Authentifizierung des Nutzers gegenüber dem ID-Token über die kontaktlose Schnittstelle; und
- Ableiten einer ID-Token-Kennung durch das Terminal aus dem ersten öffentlichen kryptographischen Schlüssel.

Falls das Terminal feststellt, dass der ID-Token die kontaktbehaftete Schnittstelle besitzt und diese einsetzbar ist, führt das Terminal die folgenden Schritte aus:
- Authentifizierung des Nutzers gegenüber dem ID-Token durch Übertragung des eingegebenen oder gelesenen statischen Geheimnisses vom Terminal an den ID-Token über die kontaktbehaftete Schnittstelle; vorzugsweise wird das statische Geheimnis unverschlüsselt im Klartext übertragen; und
- Zugriff auf eine ID-Token-Kennung durch das Terminal.

Der Zugriff auf die ID-Token-Kennung umfasst eine der folgenden Alternativen:
- Lesen eines Datenwertes, der bereits vor der Feststellung auf einem Speicher des Terminals gespeichert vorlag, von diesem Speicher, wobei der Datenwert vor der Feststellung auch auf einem Speicher des ID-Tokens gespeichert vorliegt, und Verwenden des Datenwertes als die ID-Token-Kennung durch das Terminal und durch den ID-Token; oder
- In Antwort auf die Feststellung, Generierung eines Datenwertes durch das Terminal, Übermittlung des Datenwertes vom Terminal an den ID-Token und Verwenden des generierten Datenwertes als die ID-Token-Kennung durch das Terminal und durch den ID-Token; oder
- Empfang eines Datenwertes von dem ID-Token durch das Terminal und Verwenden des generierten Datenwertes als die ID-Token-Kennung durch das Terminal und durch den ID-Token.

Ferner ist das Terminal zum Senden der ID-Token-Kennung an einen ID-Provider-Computer ausgebildet. Dies kann z.B. über ein Netzwert, z.B. ein Mobilfunknetzwerk, erfolgen.

In einem weiteren Aspekt betrifft die Erfindung ein operativ an ein Terminal koppelbares Speichermedium mit computerinterpretierbaren Instruktionen, wobei eine Ausführung der Instruktionen durch einen Prozessor eine Ausführung des folgenden Verfahrens bewirkt:
- Empfang eines von einem Nutzer eines ID-Tokens manuell eingegebenen statischen Geheimnisses oder Lesen des statischen Geheimnisses von einem an das Terminal operativ gekoppelten Speichermedium; und
- Feststellung, ob eine kontaktbehaftete Schnittstelle des ID-Tokens vorhanden und zum Datenaustauschmit einem Terminal einsetzbar ist.

Falls das Terminal feststellt, dass der ID-Token die kontaktbehaftete Schnittstelle nicht besitzt oder diese nicht einsetzbar ist, führt das Terminal ein Zero-Knowledge-Authentifizierungsprotokoll über eine kontaktlose Schnittstelle von Terminal und ID-Token zum Beweis gegenüber dem ID-Token, dass das Terminal im Besitz des eingegebenen oder gelesenen statischen Geheimnisses ist. Das Geheimnis wird dabei nicht an den ID-Token übermittelt. Das statische Geheimnis ist ein zwischen dem Nutzer und dem ID-Token geteiltes Geheimnis. Die Durchführung des Zero-Knowledge-Authentifizierungsprotokolls beinhaltet eine Erzeugung eines ersten öffentlichen kryptographischen Schlüssels durch den ID-Token und die Authentifizierung des Nutzers gegenüber dem ID-Token über die kontaktlose Schnittstelle. Außerdem leitet das Terminal im Falle dieser Feststellung eine ID-Token-Kennung aus dem ersten öffentlichen kryptographischen Schlüssel ab.

Falls das Terminal feststellt, dass der ID-Token die kontaktbehaftete Schnittstelle besitzt und diese einsetzbar ist, führt das Terminal die folgenden Schritte aus:
- Authentifizierung des Nutzers gegenüber dem ID-Token durch Übertragung des eingegebenen oder gelesenen statischen Geheimnisses an den ID-Token über die kontaktbehaftete Schnittstelle; und
- Zugriff auf eine ID-Token-Kennung durch das Terminal.

Der Zugriff umfasst eine der folgenden Alternativen:
- Lesen eines Datenwertes, der bereits vor der Feststellung auf einem Speicher des Terminals gespeichert vorlag, von diesem Speicher, wobei der Datenwert vor der Feststellung auch auf einem Speicher des ID-Tokens gespeichert vorliegt, und Verwenden des Datenwertes als die ID-Token-Kennung durch das Terminal und durch den ID-Token; oder
- In Antwort auf die Feststellung, Generierung eines Datenwertes durch das Terminal, Übermittlung des Datenwertes vom Terminal an den ID-Token und Verwenden des generierten Datenwertes als die ID-Token-Kennung durch das Terminal und durch den ID-Token; oder
- Empfang eines Datenwertes von dem ID-Token durch das Terminal und Verwenden des generierten Datenwertes als die ID-Token-Kennung durch das Terminal und durch den ID-Token.

Danach sendet das Terminal die ID-Token-Kennung an einen ID-Provider-Computer. Mit der ID-Token-Kennung wird der ID-Provider-Computer in die Lage versetzt, sich gegenüber dem ID-Token als berechtigt zum Auslesen der ein oder mehreren in dem ID-Token gespeicherten Attribute auszuweisen. Die Verbindung zwischen dem ID-Token und dem ID-Provider-Computer kann über ein Netzwerk, insbesondere das Internet, aufgebaut werden.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung sendet der ID-Provider-Computer das zumindest eine von dem ID-Token ausgelesene Attribut unmittelbar an einen weiteren Computer. Bei dem weiteren Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, von dem ID-Token-Computer an den weiteren Computer einer Bank übertragen werden.

Nach einer Ausführungsform der Erfindung empfängt der ID-Provider-Computer eine Attributspezifikation von dem weiteren Computer oder einem Nutzer-Computer. Der Nutzer-Computer kann das Terminal oder ein anderes Datenverarbeitungssystem sein, mit welchem der Nutzer gerade einen Online-Dienst, der von dem weiteren Computer bereitgestellt wird, als Client in Anspruch nimmt. Die Attributspezifikation kann zusammen mit einem Identifikator des weiteren Computers an den ID-Provider-Computer von dem Nutzer-Computer oder dem weiteren Computer übertragen werden. Mit Hilfe des Identifikators identifiziert der ID-Provider-Computer den weiteren Computer, welcher die Identifikationsdienste in Anspruch nehmen möchte, um diesem mittels der ausgelesenen Attribute die Identität des Nutzers zu vergebühren.

Im Weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Terminals mit ID-Token,
- Figur 2: Blockdiagramme verschiedener Ausführungsformen eines erfindungsgemäßen Terminals mit je einem ID-Token,
- Figur 3: ein Flussdiagramm einer Ausführungsform eines erfindungsgemäßen Verfahrens,
- Figur 4: ein Ablaufschema eines Zero-Knowledge-Authentifizierungsprotokolls zur Authentifizierung eines Terminals und eines Nutzers gegenüber einem ID-Token,
- Figur 5: ein Ablaufschema der Authentifizierung des ID-Provider-Computers gegenüber dem ID-Token, und
- Figur 6: ein Blockdiagramm eines Systems umfassend einen ID-Token, ein Terminal und ein ID-Provider-Computer.

Elemente der nachfolgenden Ausführungsformen, die einander entsprechen, werden mit denselben Bezugszeichen gekennzeichnet.

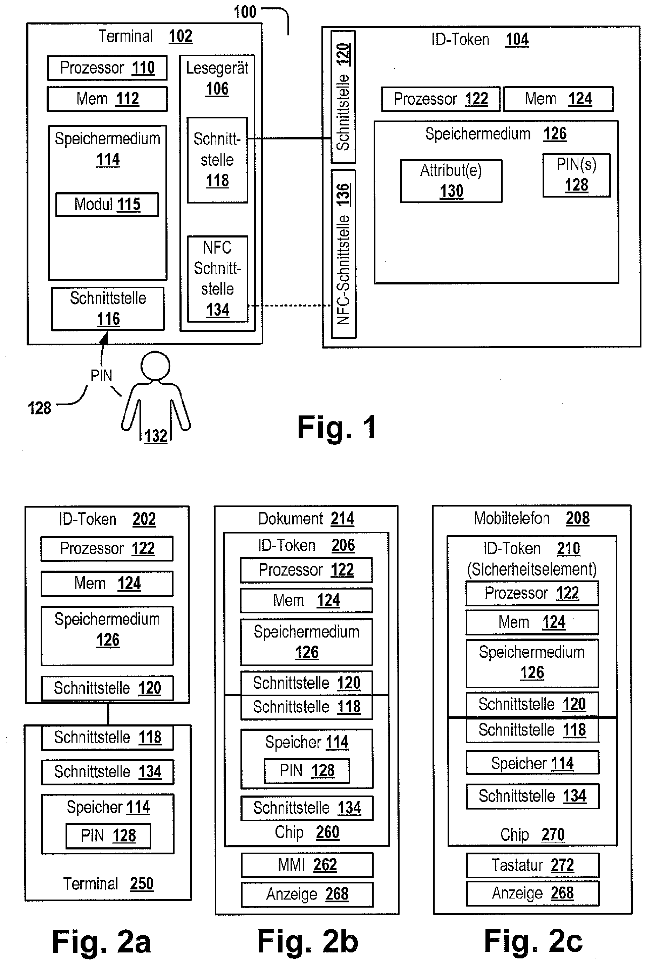

Die **Figur 1** zeigt ein System 100 mit einem Terminal 102 und einem ID-Token 104. Der ID-Token 104 besitzt einen Prozessor 122 und einen Arbeitsspeicher 124. Der ID-Token umfasst ferner ein nicht-flüchtiges Speichermedium 126 auf dem ein oder mehrere Attribute 130 sowie zumindest ein Geheimnis in Form einer PIN 128 geschützt gespeichert sind. Der ID-Token 104 besitzt ferner eine kontaktlose-NFC Schnittstelle 136 sowie eine kontaktbehaftete Schnittstelle 120 um Daten mit dem Terminal austauschen zu können. Das Terminal kann über ein Lesegerät 106 verfügen, welches eine zu Schnittstelle 120 korrespondierende kontaktbehaftete Schnittstelle 118 und eine zu Schnittstelle 136 korrespondierende NFC- Schnittstelle 134 besitzt.
Das Terminal verfügt über einen Prozessor 110, einen Arbeitsspeicher 112 und ein nicht-flüchtiges Speichermedium 114 auf welchem Instruktionen zur Durchführung eines Zero-Knowledge-Authentifizierungsprotokolls in Interaktion mit dem ID-Token 104 gespeichert sind. Außerdem verfügt das Terminal über eine Nutzer-Schnittstelle 116 die dem Nutzer 132 die Eingabe einer PIN bzw. eines Passworts 128 ermöglicht oder dazu ausgebildet ist, biometrische Daten des Nutzers zu sensieren.

**Figur 2a** zeigt ein ID-Token 202, welches lediglich über eine kontaktbehaftete Schnittstelle 120, nicht aber über eine kontaktlose Schnittstelle verfügt. Das Terminal 250 verfügt sowohl über eine kontaktbehaftete als auch über eine kontaktlose Schnittstelle und verwendet nach einer Feststellung, dass der ID-Token über eine einsatzbereite kontaktbehaftete Schnittstelle verfügt selektiv die kontaktbehaftete Schnittstelle 118 um mit dem ID-Token Daten auszutauschen.

**Figur 2b** zeigt ein Dokument 214, zum Beispiel ein Sicherheitsdokument wie etwa einen elektronischen Personalausweis, welches ein ID-Token 206 und einen als Terminal fungierenden Chip 260 als integrale Bestandteile umfasst. Der ID-Token 206 kann beispielsweise als Sicherheitselement ausgebildet sein. Der Chip kann einen nicht-flüchtigen, geschützten Speicher 114 beinhalten, auf welchem ein Geheimnis (PIN, biometrische Daten, etc.) des Nutzers 132 gespeichert sein kann. Außerdem verfügt das Dokument 214 über eine Mensch-Maschine-Schnittstelle 262 und eine Anzeige 268. Das auf dem Speicher 114 gespeicherte Geheimnis 128 kann nach Aufruf einer auf dem Chip 260 ausgeführten Logik dem Nutzer 132 über die Anzeige 268 angezeigt werden. Die Anzeige kann zusammen mit einer Abfrage erfolgen, ob das Terminal sich gegenüber dem ID-Token 206 authentifizieren soll, beispielsweise um bestimmte in dem ID-Token 206 gespeicherte Attribute zum auslesen durch einen ID-Provider-Computer freizugeben. Der Nutzer muss sodann nur noch die Abfrage über die Mensch-Maschine-Schnittstelle 262 bestätigen, er muss die PIN bzw. das Geheimnis 128 nicht mehr explizit eingeben. Die Schnittstelle 262 kann als Drucksensor, integriertes Tastaturfeld, Pin-Pad oder ähnliches ausgebildet sein und die Bestätigungsaktion des Nutzers kann entsprechend ein Drücken des Drucksensors oder die Betätigung eines Tastenfeldes sein.

**Figur 2c** zeigt ein Mobiltelefon 208 welches ein ID-Token 210 in Form eines Sicherheitselementes, einen Chip 270 sowie eine Tastatur 272 und eine Anzeige 268 besitzt. Der Chip beinhaltet eine kontaktlose 134 und eine kontaktbehaftete 118 Schnittstelle zum Datenaustausch mit dem ID-Token 210. Da der ID-Token 210 jedoch nur über eine kontaktbehaftete Schnittstelle verfügt, wird nach einer entsprechenden Feststellung durch den Chip auch nur Schnittstelle 118 zum Datenaustausch verwendet. Der nicht-flüchtige, geschützte Speicher 114 des Chips 270 kann das Geheimnis 128 gespeichert haben und den Nutzer über Anzeige 268 lediglich zur Bestätigung auffordern, dass eine Authentifizierung des Terminals gegenüber dem ID-Token basierend auf einem Zero-Knowledge-Authentifizierungsprotokoll basierend auf dem Geheimnis erfolgen soll. Alternativ kann der Nutzer das Geheimnis auch über die Tastatur 272 eingeben um die Durchführung des Zero-Knowledge-Authentifizierungsprotokolls zwischen Chip 270 und ID-Token 210 zu ermöglichen.

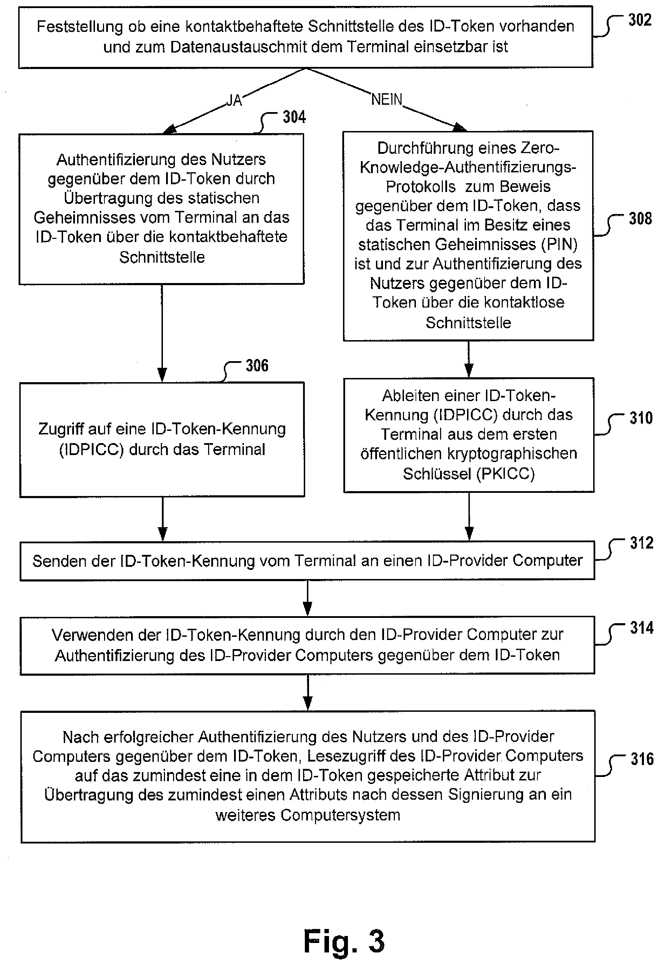

**Figur 3** zeigt ein Flussdiagramm einer Ausführungsform eines Verfahrens, wie es beispielsweise von einem Terminal 102 zusammen mit einem ID-Token 104 wie in Fig. 1 dargestellt durchgeführt werden kann. In Schritt 302 stellt das Terminal 102 fest, ob eine kontaktbehaftete Schnittstelle des ID-Tokens vorhanden ist und zum Datenaustausch mit dem Terminal einsetzbar ist. So könnte eine Schnittstelle zwar physikalisch vorhanden sein, der ID-Token 104 sich jedoch in einem Betriebsmodus befinden, welcher ausschließlich eine Kommunikation über die kontaktlose Schnittstelle vorsieht. In diesem Fall wäre also auch erforderlich, dass der ID-Token 104 in einem Betriebsmodus zum kontaktbehafteten Datenaustausch mit dem Terminal ist. Falls der ID-Token über eine kontaktbehaftete Schnittstelle verfügt, die zudem einsatzbereit ist, authentifiziert sich der Nutzer in Schritt 304 gegenüber dem ID-Token durch Übertragung des unverschlüsselten statischen Geheimnisses, zum Beispiel einer PIN, von dem Terminal 102 an den ID-Token 104 über die kontaktbehaftete Schnittstelle 118,120. Außerdem erfolgt ein Zugriff auf eine ID-Token-Kennung durch das Terminal. Die ID-Token-Kennung ist ein Wert, welche auch dem ID-Token 104 bekannt ist zum Beispiel dadurch, dass dieser Wert in Speichermedium 126 geschützt gespeichert ist.

Falls der ID-Token über keine kontaktbehaftete Schnittstelle 120 verfügt oder diese nicht einsatzbereit ist, führt das Terminal 102 in Schritt 308 ein Zero-Knowledge-Authentifizierungsprotokoll durch. Dies dient zum Beweis gegenüber dem ID-Token, dass das Terminal im Besitz eines statischen Geheimnisses zum Beispiel in Form einer PIN ist und dient außerdem zur Authentifizierung des Nutzers gegenüber dem ID-Token über die kontaktlose Schnittstelle. Danach leitet das Terminal 102 in Schritt 310 eine ID-Token-Kennung aus einem im Zero-Knowledge-Authentifizierungsprotokolls verwendeten kryptographischen Schlüssel ab, vorzugsweise dem zweiten öffentlichen Token-Schlüssel ÖS_IDT2.

In Schritt 312 sendet das Terminal die ID-Token-Kennung an einen ID-Provider-Computer. Der ID-Provider-Computer verwendet die ID-Token-Kennung in Schritt 314 um sich gegenüber dem ID-Token zu authentifizieren. Nach erfolgreicher Authentifizierung des Nutzers und des ID-Provider-Computers gegenüber dem ID-Token liest der ID-Provider-Computer ein oder mehrere in dem Speicher 126 geschützt gespeicherte Attribute 130 aus, um diese zu signieren und an einen weiteren Computer, zum Beispiel ein Computersystem eines Onlinedienstes, weiterzuleiten.

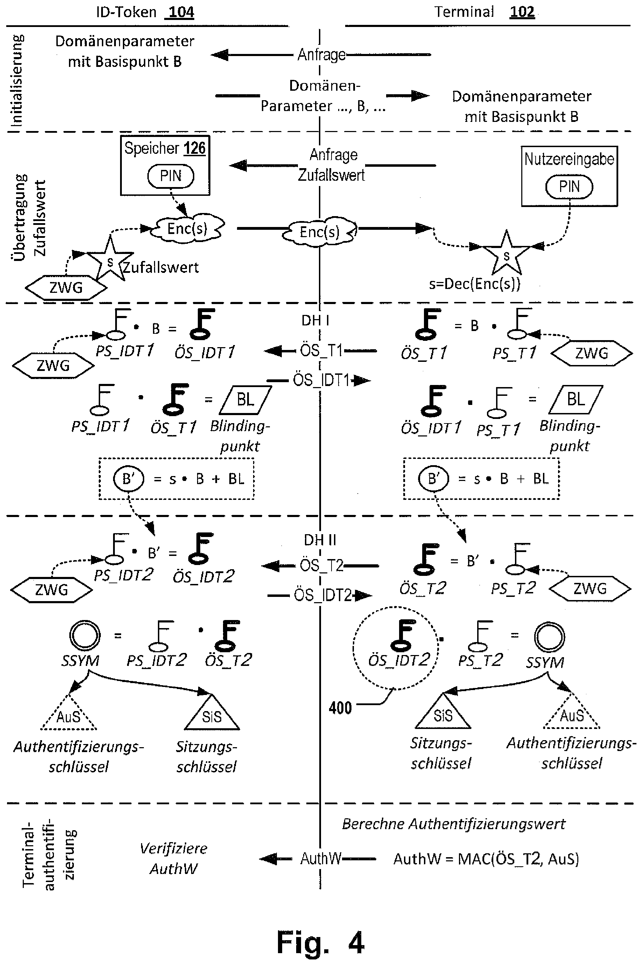

**Figur 4** zeigt ein Ablaufschema eines Zero-Knowledge-Authentifizierungsprotokolls welches über kontaktlose Schnittstellen 134, 136 von Terminal 102 und ID-Token 104 ausgeführt wird.

Nach der Feststellung 302, dass keine einsatzfähige kontaktbehaftete Schnittstelle vorhanden ist, sendet das Terminal eine Anfrage zum Empfang von Domänenparameter an den ID-Token. In dem ID-Token sind ein oder mehrere Domänenparameter jeweils mit einem zugehörigen Basispunkt B gespeichert. Ein Satz an Domänenparametern mit einem entsprechenden Basispunkt B wird in Antwort auf die Anfrage vom ID-Token an das Terminal gesendet. Die Domänenparameter legen eine elliptische Kurve fest auf welcher ein nachfolgend ausgeführter erster Diffie-Hellman-Schlüsselaustausch beruht.

Das Terminal sendet eine Anfrage zum Erhalt eines Zufallswertes an den ID-Token. Ein Zufallswertgenerator ZWG generiert daraufhin eine Zufallszahl s, welche mit der in dem geschützten Speicher 126 gespeicherten PIN verschlüsselt und in verschlüsselter Form an das Terminal gesendet wird. Das Terminal empfängt die PIN über eine Nutzereingabe und verwendet die PIN zur Entschlüsselung des empfangenen Wertes Enc(s). Nach der Entschlüsselung ist der Zufallswert s also sowohl dem ID-Token als auf dem Terminal bekannt. Sowohl der ID-Token als auch das Terminal sind im Besitz eines gemeinsamen Geheimnisses s ohne dass die PIN hierfür übertragen werden müsste.

Zum Zwecke eines ersten Diffie-Hellman-Schlüsselaustauschs DH I generiert ein Zufallswertgenerator ZWG des ID-Tokens einen Zufallswert PS_IDT1, welcher als erster privater Token-Schlüssel verwendet wird. Der erste private Token-Schlüssel wird mit dem Basispunkt B multipliziert um einen ersten öffentlichen Token-Schlüssel ÖS_IDT1 zu erhalten. In analoger Weise generiert ein terminalseitiger Zufallswertgenerator ZWG einen Zufallswert PS_T1, welcher als erster privater Terminal-Schlüssel verwendet wird. Der erste private Terminal-Schlüssel wird mit dem Basispunkt B multipliziert um einen ersten öffentlichen Terminal-Schlüssel ÖS_T1 zu erhalten. Die beiden öffentlichen Schlüssel ÖS_IDT1 und ÖS_T1 werden ausgetauscht ("erster Diffie-Hellman Schlüsselaustausch"). Im nächsten Schritt multipliziert der ID-Token den ersten privaten Token-Schlüssel mit dem ersten öffentlichen Terminal-Schlüssel um einen Blindingpunkt BL zu erhalten. In analoger Weise multipliziert das Terminal den ersten privaten Terminal-Schlüssel mit dem ersten öffentlichen Token-Schlüssel um ebenfalls den Blindingpunkt BL zu erhalten. Schließlich wird sowohl durch den ID-Token als auch durch das Terminal ein jeweils nur für eine Sitzung gültiger temporärer Wert B' (auch als gemeinsamer temporärer Basispunkt bezeichnet) aus dem Blindingpunkt, dem Zufallswert s und dem Basispunkt B berechnet.

Zum Zwecke eines zweiten Diffie-Hellman-Schlüsselaustauschs DH II generiert der Zufallswertgenerator ZWG des ID-Tokens einen Zufallswert PS_IDT2, welcher als zweiter privater Token-Schlüssel verwendet wird. Der zweite private Token-Schlüssel wird mit dem temporären Wert B' multipliziert um einen zweiten öffentlichen Token-Schlüssel ÖS_IDT2 zu erhalten. In analoger Weise generiert der terminal-seitige Zufallswertgenerator ZWG einen Zufallswert PS_T2, welcher als zweiter privater Terminal-Schlüssel verwendet wird. Der zweite private Terminal-Schlüssel wird mit dem temporären Wert B' multipliziert um einen zweiten öffentlichen Terminal-Schlüssel ÖS_T2 zu erhalten. Die beiden öffentlichen Schlüssel ÖS_IDT2 und ÖS_T2 werden ausgetauscht.

Schließlich wird sowohl durch den ID-Token als auch durch das Terminal ein symmetrischer Schlüssel SSYM berechnet. Der ID-Token multipliziert hierzu den zweiten privaten Token-Schlüssel mit dem zweiten öffentlichen Terminal-Schlüssel. Das Terminal multipliziert hierzu den zweiten privaten Terminal-Schlüssel mit dem zweiten öffentlichen Token-Schlüssel. Der symmetrischer Schlüssel SSYM kann selbst als Sitzungsschlüssel SIS zur kryptografischen Absicherung der folgenden Datenkommunikation zwischen ID-Token und Terminal dienen oder dazu verwendet werden, sowohl auf Seiten des ID-Tokens als auch auf Seiten des Terminals einen solchen Sitzungsschlüssel SIS jeweils abzuleiten. Außerdem kann von dem Sitzungsschlüssel SSYM ein Authentifizierungsschlüssel AuS abgeleitet werden. Durch Anwendung einer MAC Funktion auf den Authentifizierungsschlüssel und den zweiten öffentlichen Terminalschlüssel kann ein Authentifizierungswert AuthW durch das Terminal berechnet werden. Der Authentifizierungswert wird vom Terminal an den ID-Token übertragen damit dieser Wert durch das Terminal verifiziert werden kann. Der Authentifizierungswert dient also der Authentifizierung des Terminals gegenüber dem ID-Token.

Der ID-Token kann seinerseits einen Authentifizierungsschlüssel und den Authentifizierungswert ableiten und den Authentifizierungswert an das Terminal übermitteln um sich gegenüber dem Terminal zu authentifizieren (beidseitige Authentifizierung). Die optionalen Schritte für die Authentifizierung des ID-Tokens gegenüber dem Terminal sind in Figur 4 jedoch nicht dargestellt.

Die für das Terminal erforderlichen Informationen zur Berechnung des temporären Wertes B' werden also von dem ID-Token zur Verfügung gestellt. Das Terminal kann diese aber nur nutzen, wenn es im Besitz einer gültigen PIN ist. Die PIN muss hierfür von dem Benutzer eingegeben werden. Die PIN kann auch als CAN (card access number) ausgebildet sein, wobei die CAN dadurch in das Terminal eingegeben wird, dass der Nutzer den ID-Token mit der CAN in einer Weise vor dem Terminal positioniert, dass die CAN von einem optischen Sensor des Terminals erfasst werden kann.

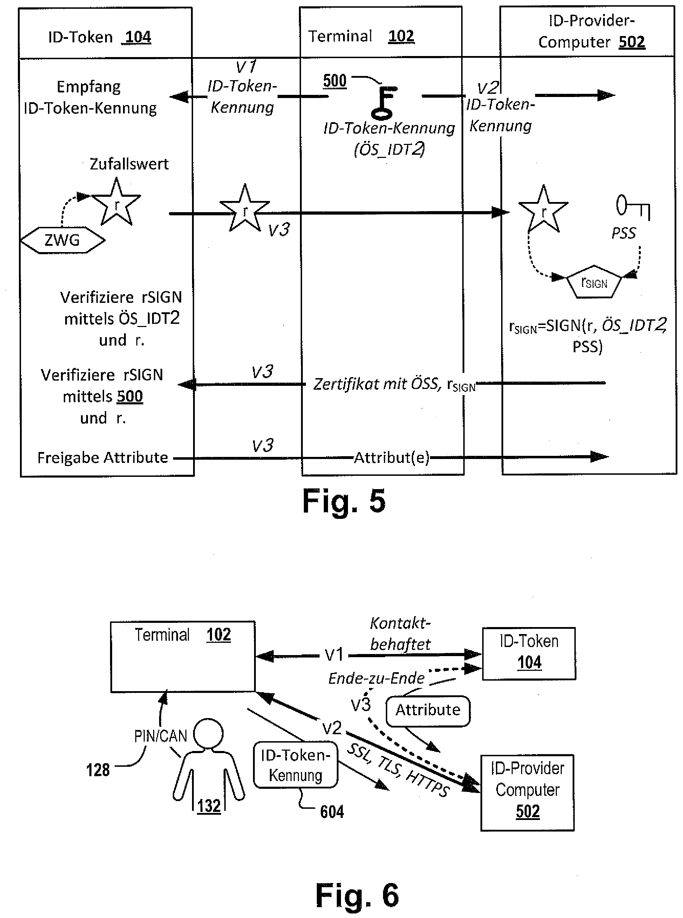

**Figur 5** zeigt Schritte die zur Authentifizierung eines ID-Provider-Computers 102 gegenüber dem ID-Token 104 dienen. Zunächst muss sichergestellt sein, dass sowohl das Terminal als auch der ID-Token über einen gemeinsamen Datenwert (ID-Token-Kennung 500) verfügen. Falls der ID-Token und das Terminal bereits ein Zero-Knowledge-Authentifizierungsprotokoll durchgeführt haben kann vorzugsweise der zweite öffentliche Token-Schlüssel ÖS_IDT2 als ID-Token-Kennung fungieren, da dieser bereits beidseitig vorliegt. Weitere Datenaustauschschritte zwischen ID-Token und Terminal zum Austausch der ID-Token-Kennung sind in diesem Fall nicht erforderlich. Falls, wie in Figur 5 dargestellt, die ID-Token-Kennung noch nicht beidseitig vorliegt, muss die Kennung gegebenenfalls von einer Seite generiert und an die andere Seite über eine erste Verbindung V1 zwischen Terminal und ID-Token übertragen werden. Außerdem muss das Terminal die ID-Token-Kennung an den ID-Provider-Computer übertragen.

Ein Zufallswertgenerator ZWG des ID-Tokens generiert einen Zufallswert r und überträgt diesen über eine Verbindung V3 an den ID-Provider-Computer 502. Der ID-Provider-Computer signiert den Zufallswert und die ID-Token-Kennung oder einen Zwischenwert, der von dem Zufallswert und der ID-Token-Kennung abgeleitet ist, mit einem privaten statischen kryptographischen Schlüssel PSS des ID-Provider-Computers. Der abgeleitete Wert kann z.B. ein Konkatenierungsprodukt aus dem Zufallswert und der ID-Token-Kennung sein. Der statische private Schlüssel des ID-Provider-Computers bildet mit einem statischen öffentlichen kryptographischen Schlüssel ÖSS ein asymmetrisches kryptographisches Schlüsselpaar.

Das Resultat dieser Signierung wird als r_{SIGN} bezeichnet. Das Resultat r_{SIGN} wird von dem ID-Provider-Computer 502 über die Verbindung V3 an den ID-Token übertragen. Vorzugsweise ist die Verbindung V3 als ein geschützter Datenkommunikations-Kanal, der auf einer Ende-zu-Ende-Verschlüsselung beruht, ausgebildet, wie zum Beispiel in Figur 6 dargestellt.

Der ID-Token ist im Besitz des statischen Schlüssels ÖSS. Der statische Schlüssel ÖSS kann z.B. online verfügbar gemacht werden oder als Bestandteil eines Zertifikates zusammen mit dem Resultat r_{SIGN} vom ID-Provider-Computer an den ID-Token übertragen werden.

Der ID-Token verifiziert mittels seiner Kopie der ID-Token-Kennung, dem Zufallswertes r und dem statischen öffentlicher Schlüssel ÖSS den empfangenen Datenwert r_{SIGN} und damit die Berechtigung den ID-Provider-Computers, Attribute aus dem geschützten Speicher des ID-Tokens auszulesen. Die Verifizierung kann z.B. darin bestehen, aus dem Zufallswert und der ID-Token-Kennung einen abgeleiteten Wert, z.B. ein Konkatenierungsprodukt aus dem Zufallswert und der ID-Token-Kennung, zu generieren und zu prüfen, ob der empfangene signierte abgeleitete Wert identisch ist mit dem durch das ID-Token abgeleiteten Wert. Im Falle einer erfolgreichen Authentifizierung des ID-Provider-Computers werden ein oder mehrere Attribute an den ID-Provider-Computer übertragen.

Zusätzlich (hier nicht dargestellt) kann das Terminal einen komprimierten Wert aus der ID-Token-Kennung berechnen, zum Beispiel einen Hashwert. Der komprimierte Wert kann zusätzlich oder anstelle der ID-Token-Kennung vom Terminal an den ID-Token übertragen werden. Der komprimierte Wert kann zur Generierung des abgeleiteten Wertes verwendet werden, z.B. dadurch, dass er zusätzlich in das Konkatenierungsprodukt eingeht. In diesem Fall muss der ID-Token über die gleiche Komprimierungsfunktion verfügen und im Zuge der Verifizierung der ID-Token-Kennung prüfen, ob ein von dem ID-Token aus der ID-Token-Kennung berechneter komprimierten Wert dem durch den ID-Token vom Terminal empfangenen komprimierten Wert entspricht. Anstatt durch das Terminal kann die Komprimierung auch durch den ID-Provider-Computer vorgenommen werden.

**Figur 6** zeigt ein System mit einem Terminal 102, das mit einem ID-Token 104 über eine erste Verbindung V1 verbunden ist. Bei der Verbindung V1 kann es sich um eine kontaktlose oder eine kontaktbehaftete Verbindung handeln. Bei der Verbindung V2 zwischen dem Terminal 102 und einem ID-Provider-Computer 102 handelt es sich vorzugsweise um eine geschützte Verbindung, zum Beispiel um eine SSL-, TLS- oder HTTPS- Verbindung. Die Verbindung V2 kann über ein Netzwerk, zum Beispiel das Internet, erfolgen. Vorzugsweise wird nach erfolgreicher Authentifizierung des Nutzers und des ID-Provider Computers gegenüber dem ID-Token mittels Protokollumsetzung eine dritte Verbindung V3 als Ende-zu-Ende-verschlüsselte Verbindung zwischen ID-Token und ID-Provider-Computer aufgebaut, welche physisch auf der ersten und der zweiten Verbindung beruht.

## Patentansprüche

1. Verfahren zum Lesen zumindest eines in einem ID-Token (104) gespeicherten Attributs (130), wobei der ID-Token einem Nutzer (132) zugeordnet ist, mit folgenden Schritten:
- Feststellung (302), durch ein Terminal (102), ob eine kontaktbehaftete Schnittstelle (120) des ID-Tokens vorhanden und zum Datenaustauschmit dem Terminal einsetzbar ist;
Im Falle dass der ID-Token die kontaktbehaftete Schnittstelle nicht besitzt oder diese nicht einsetzbar ist:
• Durchführung (308) eines Zero-Knowledge-Authentifizierungsprotokolls über eine kontaktlose Schnittstelle (134, 136) von Terminal und ID-Token zum Beweis gegenüber dem ID-Token, dass das Terminal im Besitz eines statischen Geheimnisses (128) ist, ohne dieses statische Geheimnis an den ID-Token zu übermitteln, wobei das statische Geheimnis ein zwischen dem Nutzer und dem ID-Token geteiltes Geheimnis ist, wobei die Durchführung eine Erzeugung eines ersten öffentlichen kryptographischen Schlüssels (ÖS_IDT2) durch den ID-Token umfasst und wobei die Durchführung des Zero-Knowledge-Authentifizierungsprotokolls die Authentifizierung des Nutzers gegenüber dem ID-Token über die kontaktlose Schnittstelle umfasst; und
• Ableiten (310) einer ID-Token-Kennung (400, 500, 604) durch das Terminal aus dem ersten öffentlichen kryptographischen Schlüssel (ÖS_IDT2);
Im Falle dass der ID-Token die kontaktbehaftete Schnittstelle besitzt und diese einsetzbar ist:
• Authentifizierung (304) des Nutzers gegenüber dem ID-Token durch Übertragung des statischen Geheimnisses (128) vom Terminal an den ID-Token über die kontaktbehaftete Schnittstelle;
• Zugriff (306) auf eine ID-Token-Kennung (400, 500, 604) durch das Terminal, wobei der Zugriff umfasst:
∘ Lesen eines Datenwertes, der bereits vor der Feststellung auf einem Speicher (114) des Terminals gespeichert vorlag, von diesem Speicher, wobei der Datenwert vor der Feststellung auch auf einem Speicher des ID-Tokens gespeichert vorliegt, und Verwenden des Datenwertes als die ID-Token-Kennung durch das Terminal und durch den ID-Token; oder
∘ In Antwort auf die Feststellung, Generierung eines Datenwertes durch das Terminal, Übermittlung des Datenwertes vom Terminal an den ID-Token und Verwenden des generierten Datenwertes als die ID-Token-Kennung durch das Terminal und durch den ID-Token; oder
∘ Generierung eines Datenwertes durch den ID-Token, Übermittlung des Datenwertes vom ID-Token an das Terminal und Verwenden des generierten Datenwertes als die ID-Token-Kennung durch das Terminal und durch den ID-Token;
- Senden (312) der ID-Token-Kennung vom Terminal an einen ID-Provider-Computer (502);
- Verwenden (314) der ID-Token-Kennung durch den ID-Provider-Computer zur Authentifizierung des ID-Provider-Computers gegenüber dem ID-Token;
- nach erfolgreicher Authentifizierung des Nutzers und des ID-Provider-Computers gegenüber dem ID-Token, Lesezugriff (316) des ID-Provider-Computers auf das zumindest eine in dem ID-Token gespeicherte Attribut zur Übertragung des zumindest einen Attributs nach dessen Signierung an einen weiteren Computer.

2. Verfahren nach Anspruch 1, wobei die Durchführung des Zero-Knowledge-Authentifizierungsprotokolls umfasst:
- Erste Durchführung eines Diffie-Hellman Schlüsselaustausches (DH I) unter Verwendung des statischen Geheimnis (128) durch den ID-Token und durch das Terminal zur Generierung eines ersten geteilten temporären Basispunktes (B');
- Zweite Durchführung eines Diffie-Hellman Schlüsselaustausches (DH II) unter Verwendung des ersten geteilten temporären Basispunktes (B'), wobei die zweite Durchführung die Erzeugung des ersten öffentlichen kryptographischen Schlüssels (ÖS_IDT2) und eines zweiten öffentlichen kryptographischen Schlüssel (ÖS_T2) unter Einbeziehung des statischen Geheimnisses (128) und den Austausch der ersten und zweiten öffentlichen kryptographischen Schlüssel zwischen Terminal und ID-Token umfasst; und
- Aufbau eines sicheren ersten Datenübertragungskanals (V1) zwischen ID-Token und Terminal unter Verwendung der ersten und zweiten öffentlichen kryptographischen Schlüssel; und
- Ableitung eines Authentifizierungsschlüssels (AuS) von dem ersten öffentlichen kryptographischen Schlüssel (ÖS_IDT2) durch das Terminal; und
- Verwenden des Authentifizierungsschlüssels durch das Terminal zur Authentifizierung des Nutzers gegenüber dem ID-Token über die erste geschützte Verbindung.

3. Verfahren nach Anspruch 2, wobei die ersten und zweiten öffentlichen kryptographischen Schlüssel sitzungsgebundene Schlüssel sind.

4. Verfahren nach Anspruch 2 oder 3,
wobei die Durchführung des Zero-Knowledge-Authentifizierungsprotokolls umfasst:
- Übertragung von Domänenparametern (B), welche eine elliptische Kurve festlegen, von dem ID-Token zum Terminal, wobei die Domänenparameter einen statischen Basispunkt (B) der elliptischen Kurve beinhalten;
- Generierung eines Zufallswertes (s) durch den ID-Token;
- Verschlüsselung des Zufallswertes (s) mit Hilfe des in dem ID-Token gespeicherten statischen Geheimnis (PIN) unter Erzeugung eines verschlüsselten Zufallswertes (Enc(s));
- Übertragung des verschlüsselten Zufallswertes (Enc(s)) von dem ID-Token an das Terminal;
- Verwendung des durch den Nutzer über das Terminal eingegebenen statischen Geheimnisses (PIN) zur Entschlüsselung des verschlüsselten Zufallswertes (Enc(s)) zur Rekonstruktion des Zufallswertes (s) durch das Terminal;
- Generierung eines ersten privaten Token-Schlüssels (PS_IDT1) durch den ID-Token;
- Ableitung eines ersten öffentlichen Token-Schlüssels (ÖS_IDT1) aus dem ersten privaten Token-Schlüssel (PS_IDT1) und dem Basispunkt durch den ID-Token, wobei der erste private und der erste öffentliche Token-Schlüssel ein asymmetrisches kryptographisches Schlüsselpaar bilden;
- Übertragung des ersten öffentlichen Token-Schlüssels (ÖS_IDT1) von dem ID-Token an das Terminal im Zuge des ersten Diffie-Hellman-Schlüsselaustauschs;
- Generierung eines ersten privaten Terminal-Schlüssels (PS_T1) durch das Terminal;
- Ableitung eines ersten öffentlichen Terminal-Schlüssels (ÖS_T1) aus dem ersten privaten Terminal-Schlüssel und dem statischen Basispunkt (B) durch das Terminal, wobei der erste private Terminal-Schlüssel (PS_T1) und der erste öffentliche Terminal-Schlüssel (ÖS_T1) ein asymmetrisches kryptographisches Schlüsselpaar bilden;
- Übertragung des ersten öffentlichen Terminal-Schlüssels von dem Terminal an den ID-Token im Zuge des ersten Diffie-Hellman-Schlüsselaustauschs;
- Berechnung eines Blindingpunktes (BL) aus dem ersten privaten Terminal-Schlüssel und dem ersten öffentlichen Token-Schlüssel durch das Terminal;
- Berechnung des ersten geteilten temporären Basispunktes (B') aus dem Zufallswert (s), dem statischen Basispunkt (B) und dem Blindingpunkt (BL) durch das Terminal;
- Berechnung des Blindingpunktes (BL) aus dem ersten privaten Token-Schlüssel (PS_IDT1) und dem ersten öffentlichen Terminal-Schlüssel (ÖS_T1) durch den ID-Token;
- Berechnung des ersten geteilten temporären Basispunktes (B') aus dem Zufallswert (s), dem statischen Basispunkt (B) und dem Blindingpunkt (BL) durch den ID-Token;
- Generierung eines zweiten privaten Terminal-Schlüssels (PS_T2) durch das Terminal;
- Ableitung eines zweiten öffentlichen Terminal-Schlüssels (ÖS_T2) aus dem zweiten privaten Terminal-Schlüssel und dem ersten geteilten temporären Basispunkt (B') durch das Terminal, wobei der zweite private Terminal-Schlüssel und der zweite öffentliche Terminal-Schlüssel zusammen ein asymmetrisches kryptographisches Schlüsselpaar bilden;
- Übertragung des zweiten öffentlichen Terminal-Schlüssels (ÖS_T2) von dem Terminal an den ID-Token im Zuge des zweiten Diffie-Hellman Schlüsselaustauschs (DH II);
- Generierung eines zweiten privaten Token-Schlüssels (PS_IDT2) durch den ID-Token;
- Ableitung eines zweiten öffentlichen Token-Schlüssels (ÖS_IDT2) aus dem zweiten privaten Token-Schlüssel (PS_IDT2) und dem ersten geteilten temporären Basispunkt (B') durch den ID-Token, wobei der zweite öffentliche Token-Schlüssel und der zweite private Token-Schlüssel zusammen ein asymmetrisches kryptographisches Schlüsselpaar bilden;
- Übertragung des zweiten öffentlichen Token-Schlüssels (ÖS_IDT2) von dem ID-Token an das Terminal, wobei der zweite öffentliche Token-Schlüssel (ÖS_IDT2) als der erste öffentliche Schlüssel dient, der als ID-Token-Kennung verwendet wird;
- Berechnung eines Sitzungsschlüssels (SSYM, SiS) aus dem zweiten öffentlichen Token-Schlüssel und dem zweiten öffentlichen Terminal-Schlüssel durch den ID-Token;
- Berechnung des Sitzungsschlüssels (SSYM, SiS) aus dem zweiten öffentlichen Token-Schlüssel und dem zweiten öffentlichen Terminalschlüssel durch das Terminal;
- Berechnung des Authentifizierungsschlüssels (AuS) aus dem Sitzungsschlüssel (SSYM) durch das Terminal;
- Berechnung des Authentifizierungsschlüssels (AuS) aus dem Sitzungsschlüssel (SSYM) durch den ID-Token in der Funktion eines Referenzwertes;
- Verwenden des Sitzungsschlüssel (SSYM, SiS) jeweils durch das Terminal und der ID-Token zum Aufbau der ersten geschützten Verbindung; und
- Verwendung des Authentifizierungsschlüssels (AuS) zur Authentifizierung des Terminals gegenüber dem ID-Token.

5. Verfahren nach einem der vorigen Ansprüche, wobei die Authentifizierung des ID-Provider-Computers gegenüber dem ID-Token mit Hilfe eines Zertifikats des ID-Provider-Computers erfolgt, wobei das Zertifikat eine Angabe derjenigen in dem ID-Token gespeicherten Attribute beinhaltet, für welche das ID-Provider-Computers für den Lesezugriff berechtigt ist.

6. Verfahren nach einem der vorigen Ansprüche, wobei die Authentifizierung des ID-Provider-Computers gegenüber dem ID-Token umfasst:
- Senden eines Zertifikats des ID-Provider-Computers, welches einen statischen öffentlichen Schlüssel (ÖSS) des ID-Provider-Computers enthält, von dem ID-Provider-Computer über das Terminal an den ID-Token;
- Verifikation des Zertifikats durch den ID-Token;
- Generierung eines Prüfwertes (r) durch den ID-Token;
- Senden des Prüfwertes von dem ID-Token an den ID-Provider-Computer über das Terminal;
- Erzeugung eines Zwischenwertes (r_{SIGN}), welcher zumindest von dem Prüfwert und von der ID-Token-Kennung abgeleitet ist, durch den ID-Provider-Computer;
- Signieren des Zwischenwertes mit einem statischen privaten kryptographischen Schlüssel (PSS) des ID-Provider-Computers zur Generierung eines signierten Wertes (r_{SIGN}), wobei der statische private Schlüssel mit dem statischen öffentlichen Schlüssel (ÖSS) des Zertifikats ein asymmetrisches kryptographisches Schlüsselpaar bildet;
- Übermittlung des signierten Wertes (r_{SIGN}) vom ID-Provider-Computer über das Terminal an den ID-Token;
- Signaturprüfung des signierten Wertes durch den ID-Token mit Hilfe des statischen öffentlichen Schlüssels (ÖSS) des Zertifikates.

7. Verfahren nach Anspruch 6, ferner mit:
- Berechnung eines komprimierten Wertes aus der ID-Token-Kennung durch den ID-Provider-Computer;
- Konkatenierung des komprimierten Wertes mit dem Prüfwert (r) und der ID-Token-Kennung zur Erzeugung des Zwischenwertes.

8. Verfahren nach einem der vorigen Ansprüche, ferner mit:
- nach erfolgreicher Authentifizierung des ID-Provider-Computers gegenüber dem ID-Token, Aufbau einer sicheren Verbindung (V3) zwischen dem ID-Provider-Computer und dem ID-Token über das Terminal, wobei die geschützte Verbindung auf einer Ende-zu-Ende Verschlüsselung beruht, und wobei das zumindest eine Attribut über die geschützte Verbindung vom ID-Token ausgelesen und an den ID-Provider-Computer übertragen werden.

9. Verfahren nach einem der vorigen Ansprüche, wobei es sich bei dem ID-Token um ein Sicherheitselement (210) handelt, welches in ein mobiles Telekommunikationsgerät (208) integriert ist, wobei die durch das Terminal ausgeführten Verfahrensschritte durch ein Applikationsprogramm ausgeführt werden, wobei das Applikationsprogramm auf einem Prozessor des Mobilfunkgerätes ausgeführt wird.

10. Verfahren nach einem der vorigen Ansprüche, wobei es sich bei dem statischen Geheimnis um eines der folgenden Objekte handelt: eine PIN; eine CAN; ein Passwort; oder ein biometrisches Merkmal des Nutzers.

11. Verfahren nach einem der vorigen Ansprüche,
- wobei der ID-Token integraler Bestandteil eines Dokumentes (214) ist, wobei das Dokument über ein integriertes PIN-Pad (262) verfügt, wobei das Dokument über einen Chip (260) verfügt, wobei der Chip als Terminal dient; oder
- wobei der ID-Token integraler Bestandteil eines Mobilfunkgerätes ist, wobei das Mobilfunkgerät über eine integrierte Tastatur (272) verfügt, wobei eine auf dem Prozessor des Mobilfunkgeräts ausgeführte Applikation, die mit dem ID-Token interoperabel ist, als Terminal dient;
ferner mit:
- Empfang des statischen Geheimnisses durch den ID-Token als einen manuell über die Tastatur oder über das PIN-Pad von dem Nutzer eingegebenen Wert;
- Vergleich des manuell eingegebenen statischen Geheimnisses durch den ID-Token mit einem in dem ID-Token gespeicherten Referenzwert des statischen Geheimnisses zur Authentifizierung des Nutzers.

12. Verfahren nach einem der vorigen Ansprüche 1-10,
- wobei der ID-Token integraler Bestandteil eines Dokumentes (214) ist, wobei das Dokument über ein integriertes PIN-Pad (262) verfügt, wobei das Dokument über einen Chip (260) mit integriertem Speicher verfügt in dem das statische Geheimnis gespeichert ist, wobei der Chip als Terminal dient; oder
- wobei der ID-Token integraler Bestandteil eines Mobilfunkgerätes (208) ist, wobei das Mobilfunkgerät eine integrierte Tastatur und einen integrierten Speicher beinhaltet in dem das statische Geheimnis gespeichert ist, wobei eine auf dem Prozessor des Mobilfunkgeräts ausgeführte Applikation, die mit dem ID-Token interoperabel ist, als Terminal dient;
ferner mit:
- Anzeige des in dem integrierten Speicher gespeicherten statischen Geheimnisses und/oder einer Bestätigungsanfrage über eine Anzeige (268);
- Empfang eines Bestätigungssignals des Nutzers durch das Terminal, dass das gespeicherte statische Geheimnis vom Terminal an den ID-Token übertragen werden soll;
- Im Falle des Empfangs des Bestätigungssignals, Durchführung der Übertragung des statischen Geheimnisses über die kontaktbehaftete Schnittstelle.

13. Terminal (102) mit
- einen Datenspeicher (114), der an das Terminal operativ gekoppelt ist;
- Mitteln zum Empfang eines von einem Nutzer eines ID-Tokens manuell eingegebenen statischen Geheimnisses und/oder Mittel zum Lesen des statischen Geheimnisses von dem Datenspeicher;
- eine kontaktlose Schnittstelle (134) zum Datenaustausch mit einem ID-Token (104);
- eine kontaktbehaftete Schnittstelle (118) zum Datenaustausch mit dem ID-Token;
- Mittel (115) zur Feststellung, ob eine kontaktbehaftete Schnittstelle des ID-Tokens vorhanden und zum Datenaustauschmit dem Terminal einsetzbar ist;
- Mittel (116) zur Authentifizierung des Nutzers gegenüber dem ID-Token;
wobei das Terminal dazu ausgebildet ist, im Falle der Feststellung (302), dass der ID-Token die kontaktbehaftete Schnittstelle nicht besitzt oder diese nicht einsetzbar ist, folgende Schritte auszuführen:
• Durchführung (308) eines Zero-Knowledge-Authentifizierungsprotokolls über die kontaktlose Schnittstelle zum Beweis gegenüber dem ID-Token, dass das Terminal im Besitz des statischen Geheimnisses (128) ist, ohne dieses statische Geheimnis an den ID-Token zu übermitteln, wobei das statische Geheimnis ein zwischen dem Nutzer und dem ID-Token geteiltes Geheimnis ist, wobei die Durchführung eine Erzeugung eines ersten öffentlichen kryptographischen Schlüssels (ÖS_IDT2) durch den ID-Token umfasst und wobei die Durchführung des Zero-Knowledge-Authentifizierungsprotokolls die Authentifizierung des Nutzers gegenüber dem ID-Token über die kontaktlose Schnittstelle umfasst; und
• Ableiten (310) einer ID-Token-Kennung (ÖS_IDT2, 400, 500, 604) durch das Terminal aus dem ersten öffentlichen kryptographischen Schlüssel (ÖS_IDT2);
Im Falle einer Feststellung (302), dass der ID-Token die kontaktbehaftete Schnittstelle besitzt und diese einsetzbar ist:
• Authentifizierung (304) des Nutzers gegenüber dem ID-Token durch Übertragung des eingegebenen oder gelesenen statischen Geheimnisses (128) vom Terminal an den ID-Token über die kontaktbehaftete Schnittstelle;
• Zugriff (306) auf eine ID-Token-Kennung (ÖS_IDT2, 400, 500, 604) durch das Terminal, wobei der Zugriff umfasst:
∘ Lesen eines Datenwertes, der bereits vor der Feststellung auf einem Speicher (114) des Terminals gespeichert vorlag, von diesem Speicher, wobei der Datenwert vor der Feststellung auch auf einem Speicher des ID-Tokens gespeichert vorliegt, und Verwenden des Datenwertes als die ID-Token-Kennung durch das Terminal und durch den ID-Token; oder
∘ In Antwort auf die Feststellung, Generierung eines Datenwertes durch das Terminal, Übermittlung des Datenwertes vom Terminal an den ID-Token und Verwenden des generierten Datenwertes als die ID-Token-Kennung durch das Terminal und durch den ID-Token; oder
∘ Empfang eines Datenwertes von dem ID-Token durch das Terminal und Verwenden des generierten Datenwertes als die ID-Token-Kennung durch das Terminal und durch den ID-Token;
- Senden (312) der ID-Token-Kennung (ÖS_IDT2, 400, 500, 604) vom Terminal an einen ID-Provider-Computer.

14. Speichermedium (114) mit computerinterpretierbaren Instruktionen, wobei das Speichermedium operativ an ein Terminal (102) koppelbar ist und wobei eine Ausführung der Instruktionen durch einen Prozessor (110) eine Ausführung des folgenden Verfahrens bewirkt:
- Empfang eines von einem Nutzer eines ID-Tokens (104) manuell eingegebenen statischen Geheimnisses (128) oder Lesen des statischen Geheimnisses von einem operativ an das Terminal gekoppelten Speichermedium;
- Feststellung (302), ob eine kontaktbehaftete Schnittstelle des ID-Tokens vorhanden und zum Datenaustauschmit einem Terminal einsetzbar ist;
Im Falle der Feststellung, dass der ID-Token die kontaktbehaftete Schnittstelle nicht besitzt oder diese nicht einsetzbar ist:
• Durchführung (308) eines Zero-Knowledge-Authentifizierungsprotokolls über eine kontaktlose Schnittstelle von Terminal und ID-Token zum Beweis gegenüber dem ID-Token, dass das Terminal im Besitz des eingegebenen oder gelesenen statischen Geheimnisses (128) ist, ohne dieses statische Geheimnis an den ID-Token zu übermitteln, wobei das statische Geheimnis ein zwischen dem Nutzer und dem ID-Token geteiltes Geheimnis ist, wobei die Durchführung eine Erzeugung eines ersten öffentlichen kryptographischen Schlüssels (ÖS_IDT2) durch den ID-Token umfasst und wobei die Durchführung des Zero-Knowledge-Authentifizierungsprotokolls die Authentifizierung des Nutzers gegenüber dem ID-Token über die kontaktlose Schnittstelle umfasst; und
• Ableiten (310) einer ID-Token-Kennung (ÖS_IDT2, 400, 500, 604) aus dem ersten öffentlichen kryptographischen Schlüssel (ÖS_IDT2);
Im Falle einer Feststellung, dass der ID-Token die kontaktbehaftete Schnittstelle besitzt und diese einsetzbar ist:
• Authentifizierung (304) des Nutzers gegenüber dem ID-Token durch Übertragung des eingegebenen oder gelesenen statischen Geheimnisses (128) an den ID-Token über die kontaktbehaftete Schnittstelle;
• Zugriff (306) auf eine ID-Token-Kennung (ÖS_IDT2, 400, 500, 604) durch das Terminal, wobei der Zugriff umfasst:
∘ Lesen eines Datenwertes, der bereits vor der Feststellung auf einem Speicher (114) des Terminals gespeichert vorlag, von diesem Speicher, wobei der Datenwert vor der Feststellung auch auf einem Speicher des ID-Tokens gespeichert vorliegt, und Verwenden des Datenwertes als die ID-Token-Kennung (IDPICC) durch das Terminal und durch den ID-Token; oder
∘ In Antwort auf die Feststellung, Generierung eines Datenwertes durch das Terminal, Übermittlung des Datenwertes vom Terminal an den ID-Token und Verwenden des generierten Datenwertes als die ID-Token-Kennung (IDPICC) durch das Terminal und durch den ID-Token; oder
∘ Empfang eines Datenwertes von dem ID-Token durch das Terminal und Verwenden des generierten Datenwertes als die ID-Token-Kennung (IDPICC) durch das Terminal und durch den ID-Token;
- Senden (312) der ID-Token-Kennung (ÖS_IDT2, 400, 500, 604) vom Terminal an einen ID-Provider-Computer.

## Claims

1. A method for reading at least one attribute (130) stored in an ID token (104),
wherein the ID token is assigned to a user (132), said method comprising the following steps:
- determining (302), by means of a terminal (102), whether a contact-based interface (120) of the ID token is present and can be used for data exchange with the terminal;
if the ID token does not have the contact-based interface or this cannot be used:
• implementing (308) a zero-knowledge authentication protocol via a contactless interface (134, 136) of the terminal and ID token in order to prove to the ID token that the terminal is in possession of a static secret (128), without transmitting this static secret to the ID token, wherein the static secret is a secret shared between the user and the ID token, wherein the implementation comprises a generation of a first public cryptographic key (ÖS_IDT2) by the ID token, and wherein the implementation of the zero-knowledge authentication protocol comprises the authentication of the user to the ID token via the contactless interface; and
• deriving (310) an ID token identifier (400, 500, 604) by the terminal from the first public cryptographic key (ÖS_IDT2);
if the ID token has the contact-based interface and this can be used:
• authenticating (304) the user to the ID token by transfer of the static secret (128) from the terminal to the ID token via the contact-based interface;
• accessing (306) an ID token identifier (400, 500, 604) by the terminal, wherein the access comprises:
∘ reading a data value, which was already stored on a memory (114) of the terminal prior to the determination, from this memory, wherein the data value is also stored on a memory of the ID token prior to the determination, and using the data value as the ID token identifier by means of the terminal and by means of the ID token; or
∘ in response to the determination, generating a data value by means of the terminal, transmitting the data value from the terminal to the ID token, and using the generated data value as the ID token identifier by means of the terminal and by means of the ID token; or
∘ generating a data value by means of the ID token, transmitting the data value from the ID token to the terminal, and using the generated data value as the ID token identifier by means of the terminal and by means of the ID token;
- sending (312) the ID token identifier from the terminal to an ID provider computer (502);
- using (314) the ID token identifier by means of the ID provider computer in order to authenticate the ID provider computer to the ID token;
- following successful authentication of the user and the ID provider computer to the ID token, granting read access (316) of the ID provider computer to the at least one attribute stored in the ID token in order to transfer the at least one attribute, after signing thereof, to a further computer.

2. The method according to claim 1, wherein the implementation of the zero-knowledge authentication protocol comprises:
- first implementation of a Diffie-Hellman key exchange (DH I) with use of the static secret (128) by means of the ID token and by means of the terminal for generation of a first shared temporary base point (B');
- second implementation of a Diffie-Hellman key exchange (DH II) with use of the first shared temporary base point (B'), wherein the second implementation comprises the generation of the first public cryptographic key (ÖS_IDT2) and a second public cryptographic key (ÖS_T2) with the inclusion of the static secret (128) and the exchange of the first and second public cryptographic key between terminal and ID token; and
- establishing a secure first data transfer channel (V1) between ID token and terminal with use of the first and second public cryptographic key; and
- deriving an authentication key (AuS) from the first public cryptographic key (ÖS_IDT2) by means of the terminal; and
- using the authentication key by means of the terminal to authenticate the user to the ID token via the first protected connection.

3. The method according to claim 2, wherein the first and second public cryptographic key are session-bound keys.

4. The method according to claim 2 or 3,
wherein the implementation of the zero-knowledge authentication protocol comprises:
- transferring domain parameters (B), which define an elliptic curve, from the ID token to the terminal, wherein the domain parameters contain a static base point (B) of the elliptic curve;
- generating a random value (s) by the ID token;
- encrypting the random value (s) with the aid of the static secret (PIN) stored in the ID token with generation of an encrypted random value (Enc(s));
- transferring the encrypted random value (Enc(s)) from the ID token to the terminal;
- using the static secret (PIN) input by the user via the terminal to decrypt the encrypted random value (Enc(s)) for reconstruction of the random value by means of the terminal;
- generating a first private token key (PS_IDT1) by means of the ID token;
- deriving a first public token key (ÖS_IDT1) from the first private token key (PS_IDT1) and the base point by means of the ID token, wherein the first private and the first public token key form an asymmetric cryptographic key pair;
- transferring the first public token key (ÖS_IDT1) from the ID token to the terminal during the course of the first Diffie-Hellman key exchange;
- generating a first private terminal key (PS_T1) by means of the terminal;
- deriving a first public terminal key (ÖS_T1) from the first private terminal key and the static base point (B) by means of the terminal, wherein the first private terminal key (PS_T1) and the first public terminal key (ÖS_T1) form an asymmetric cryptographic key pair;
- transferring the first public terminal key from the terminal to the ID token during the course of the first Diffie-Hellman key exchange;
- computing a blinding point (BL) from the first private terminal key and the first public token key by means of the terminal;
- computing the first shared temporary base point (B') from the random value (s), the static base point (B) and the blinding point (BL) by means of the terminal;
- computing the blinding point (BL) from the first private token key (PS_IDT1) and the first public terminal key (ÖS_T1) by means of the ID token;
- computing the first shared temporary base point (B') from the random value (s), the static base point (B) and the blinding point (BL) by means of the ID token;
- generating a second private terminal key (PS_T2) by means of the terminal;
- deriving a second public terminal key (ÖS_T2) from the second private terminal key and from the first shared temporary base point (B') by means of the terminal, wherein the second private terminal key and the second public terminal key together form an asymmetric cryptographic key pair;
- transferring the second public terminal key (ÖS_T2) from the terminal to the ID token during the course of the second Diffie-Hellman key exchange (DH II);
- generating a second private token key (PS_IDT2) by means of the ID token;
- deriving a second public token key (ÖS_IDT2) from the second private token key (PS_IDT2) and the first shared temporary base point (B') by means of the ID token, wherein the second public token key and the second private token key together form an asymmetric cryptographic key pair;
- transferring the second public token key (ÖS_IDT2) from the ID token to the terminal, wherein the second public token key (ÖS_IDT2) serves as the first public key, which is used as ID token identifier;
- computing a session key (SSYM, SiS) from the second public token key and the second public terminal key by means of the ID token;
- computing the session key (SSYM, SiS) from the second public token key and the second public terminal key by means of the terminal;
- computing the authentication key (AuS) from the session key (SSYM) by means of the terminal;
- computing the authentication key (AuS) from the session key (SSYM) by means of the ID token in the function of a reference value;
- using the session key (SSYM, SiS) by means of each of the terminal and the ID token in order to establish the first protected connection; and
- using the authentication key (AuS) to authenticate the terminal to the ID token.

5. The method according to any one of the preceding claims, wherein the ID provider computer is authenticated to the ID token with the aid of a certificate of the ID provider computer, wherein the certificate contains a specification of those attributes stored in the ID token for which the ID provider computer is authorised for read access.

6. The method according to any one of the preceding claims, wherein the authentication of the ID provider computer to the ID token comprises:
- sending a certificate of the ID provider computer, which certificate contains a static public key (ÖSS) of the ID provider computer, from the ID provider computer via the terminal to the ID token;
- verifying the certificate by means of the ID token;
- generating a test value (r) by means of the ID token;
- sending the test value from the ID token to the ID provider computer via the terminal;
- generating an intermediate value (r_{SIGN}), which is derived at least from the test value and from the ID token identifier, by means of the ID provider computer;
- signing the intermediate value with a static private cryptographic key (PSS) of the ID provider computer in order to generate a signed value (r_{SIGN}), wherein the static private key together with the static public key (OSS) of the certificate forms an asymmetric cryptographic key pair;
- transmitting the signed value (r_{SIGN}) from the ID provider computer via the terminal to the ID token;
- checking the signature of the signed value by means of the ID token with the aid of the static public key (ÖSS) of the certificate.

7. The method according to claim 6, further comprising:
- computing a compressed value from the ID token identifier by means of the ID provider computer;
- concatenating the compressed value with the test value (r) and the ID token identifier in order to generate the intermediate value.

8. The method according to any one of the preceding claims, further comprising:
- establishing a secure connection (V3) between the ID provider computer and the ID token via the terminal following successful authentication of the ID provider computer to the ID token, wherein the protected connection is based on an end-to-end encryption, and wherein the at least one attribute is read out from the ID token via the protected connection and is transferred to the ID provider computer.

9. The method according to any one of the preceding claims, wherein the ID token is a security element (210), which is integrated in a mobile communication device (208), wherein the method steps executed by the terminal are executed by an application program, wherein the application program is executed on a processor of the mobile communication device.

10. The method according to any one of the preceding claims, wherein the static secret is one of the following objects: a PIN; a CAN; a password; or a biometric feature of the user.

11. The method according to any one of the preceding claims,
- wherein the ID token is an integral part of a document (214), wherein the document has an integrated PIN pad (262), wherein the document has a chip (260), wherein the chip serves as a terminal; or
- wherein the ID token is an integral part of a mobile communication device, wherein the mobile communication device has an integrated keypad (272), wherein an application executed on the processor of the mobile communication device, which application is interoperable with the ID token, serves as a terminal;
further comprising the steps of:
- receiving the static secret by the ID token as a value input manually by the user via the keypad or via the PIN pad;
- comparing the manually input static secret by the ID token with a reference value of the static secret stored in the ID token for authentication of the user.

12. The method according to any one of preceding claims 1-10,
- wherein the ID token is an integral part of a document (214), wherein the document has an integrated PIN pad (262), wherein the document has a chip (260) with integrated memory, in which the static secret is stored, wherein the chip serves as a terminal; or
- wherein the ID token is an integral part of a mobile communication device (208), wherein the mobile communication device contains an integrated keypad and an integrated memory, in which the static secret is stored, wherein an application executed on the processor of the mobile communication device, which application is interoperable with the ID token, serves as a terminal;
further comprising the steps of:
- displaying the static secret stored in the integrated memory and/or a confirmation request via a display (268);
- receiving a confirmation signal of the user by the terminal that the stored static secret is to be transferred from the terminal to the ID token;
- in the case of the receipt of the confirmation signal, implementing the transfer of the static secret via the contact-based interface.

13. A terminal (102) comprising
- a data memory (114), which is operatively coupled to the terminal;
- means for receiving a static secret input manually by a user of an ID token and/or means for reading the static secret from the data memory;
- a contactless interface (134) for data exchange with an ID token (104);
- a contact-based interface (118) for data exchange with the ID token;
- means (115) for determining whether a contact-based interface of the ID token is present and can be used for data exchange with the terminal;
- means (116) for authenticating the user to the ID token;
wherein the terminal is configured, in the event of determination (302) of the fact that the ID token does not have the contact-based interface or that this cannot be used, to perform the following steps:
• implementing (308) a zero-knowledge authentication protocol via the contactless interface in order to prove to the ID token that the terminal is in possession of the static secret (128), without transmitting this static secret to the ID token, wherein the static secret is a secret shared between the user and the ID token, wherein the implementation comprises a generation of a first public cryptographic key (ÖS_IDT2) by means of the ID token, and wherein the implementation of the zero-knowledge authentication protocol comprises the authentication of the user to the ID token via the contactless interface; and
• deriving (310) an ID token identifier (ÖS_IDT2, 400, 500, 604) by means of the terminal from the first public cryptographic key (ÖS_IDT2);
should it be determined (302) that the ID token has the contact-based interface and that this can be used:
• authenticating (304) the user to the ID token by transfer of the input or read static secret (128) from the terminal to the ID token via the contact-based interface;
• accessing (306) an ID token identifier (ÖS_IDT2, 400, 500, 604) by means of the terminal, wherein the access comprises:
∘ reading a data value, which was already stored on a memory (114) of the terminal prior to the determination, from this memory, wherein the data value is also stored on a memory of the ID token prior to the determination, and using the data value as the ID token identifier by means of the terminal and by means of the ID token; or
∘ in response to the determination, generating a data value by means of the terminal, transmitting the data value from the terminal to the ID token, and using the generated data value as the ID token identifier by means of the terminal and by means of the ID token; or
∘ receiving a data value from the ID token by means of the terminal and using the generated data value as the ID token identifier by means of the terminal and by means of the ID token;
- sending (312) the ID token identifier (ÖS_IDT2, 400, 500, 604) from the terminal to an ID provider computer.

14. A memory medium (114) with computer-interpretable instructions, wherein the memory medium can be operatively coupled to a terminal (102), and wherein an execution of the instructions by means of a processor (110) results in an execution of the following method:
- receiving a static secret (128) input manually by a user of an ID token (104), or reading the static secret from a memory medium operatively coupled to the terminal; and
- determining (302) whether a contact-based interface of the ID token is present and can be used for data exchange with a terminal;
if it is determined that the ID token does not have the contact-based interface or that this cannot be used:
• implementing (308) a zero-knowledge authentication protocol via a contactless interface of the terminal and ID token in order to prove to the ID token that the terminal is in possession of the input or read static secret (128), without transmitting the static secret to the ID token, wherein the static secret is a secret shared between the user and the ID token, wherein the implementation comprises a generation of a first public cryptographic key (ÖS_IDT2) by means of the ID token, and wherein the implementation of the zero-knowledge authentication protocol comprises the authentication of the user to the ID token via the contactless interface; and
• deriving (310) an ID token identifier (ÖS_IDT2, 400, 500, 604) from the first public cryptographic key (ÖS_IDT2);
if it is determined that the ID token has the contact-based interface and that this can be used:
• authenticating (304) the user to the ID token by transfer of the input or read static secret (128) to the ID token via the contact-based interface;
• accessing (306) an ID token identifier (ÖS_IDT2, 400, 500, 604) by the terminal, wherein the access comprises:
∘ reading a data value, which was already stored on a memory (114) of the terminal prior to the determination, from this memory, wherein the data value is also stored on a memory of the ID token prior to the determination, and using the data value as the ID token identifier (IDPICC) by means of the terminal and by means of the ID token; or
∘ in response to the determination, generating a data value by means of the terminal, transmitting the data value from the terminal to the ID token, and using the generated data value as the ID token identifier (IDPICC) by means of the terminal and by means of the ID token; or
∘ receiving a data value from the ID token by means of the terminal, and using the generated data value as the ID token identifier (IDPICC) by means of the terminal and by means of the ID token;
- sending (312) the ID token identifier (ÖS_IDT2, 400, 500, 604) from the terminal to an ID provider computer.

## Revendications

1. Procédé de lecture d'au moins un attribut (130) stocké dans un jeton d'identification (104), où le jeton d'identification est associé à un utilisateur (132), avec les étapes suivantes :
- constatation (302), par un terminal (102) qu'une interface dotée de contacts (120) du jeton d'identification est présente et peut être mise à contribution pour l'échange de données avec le terminal ;
dans le cas où le jeton d'identification ne possède pas l'interface dotée de contacts ou que celle-ci ne peut pas être mise à contribution :
• exécution (308) d'un protocole d'authentification à divulgation nulle de connaissance, par le biais d'une interface sans contact (134, 136), du terminal et du jeton d'identification pour apporter une preuve vis-à-vis du jeton d'identification que le terminal est en possession d'un secret statistique (128), sans transmettre ce secret statistique au jeton d'identification, où le secret statistique est un secret partagé entre l'utilisateur et le jeton d'identification, où l'exécution comprend une création d'une première clé cryptographique publique (OS_IDT2) par le jeton d'identification et où l'exécution du protocole d'authentification à divulgation nulle de connaissance comprend l'authentification de l'utilisateur vis-à-vis du jeton d'identification par le biais de l'interface sans contact ; et
• dérivation (310) d'une identité de jeton d'identification (400, 500, 604) par le terminal à partir de la première clé cryptographique publique (OS_IDT2) ;
dans le cas où le jeton d'identification possède l'interface dotée de contacts et
que celle-ci peut être mise à contribution :
• authentification (304) de l'utilisateur vis-à-vis du jeton d'identification par la transmission du secret statistique (128) du terminal vers le jeton d'identification par le biais de l'interface dotée de contacts ;
• accès (306) à une identité de jeton d'identification (400, 500, 604) par le terminal, où l'accès comprend :
° la lecture d'une valeur de donnée qui est déjà présente stockée dans une mémoire (114) du terminal avant la constatation, à partir de cette mémoire, où la valeur de donnée est également présente stockée dans une mémoire du jeton d'identification, et l'utilisation de la valeur de donnée en tant qu'identité de jeton d'identification par le terminal et par le jeton d'identification ; ou
° en réponse à la constatation, la création d'une valeur de donnée par le terminal, la transmission de la valeur de donnée du terminal vers le jeton d'identification et l'utilisation de la valeur de donnée créée en tant qu'identité de jeton d'identification par le terminal et par le jeton d'identification ; ou
° la création d'une valeur de donnée par le jeton d'identification, la transmission de la valeur de donnée du jeton d'identification vers le terminal et l'utilisation de la valeur de donnée créée en tant qu'identité de jeton d'identification par le terminal et le jeton d'identification ;
- envoi (312) de l'identité de jeton d'identification du terminal vers l'ordinateur fournisseur d'identification (502) ;
- utilisation (314) de l'identité de jeton d'identification par l'ordinateur fournisseur d'identification pour l'authentification de l'ordinateur fournisseur d'identification vis-à-vis du jeton d'identification ;
- après une authentification réussie de l'utilisateur et de l'ordinateur fournisseur d'identification vis-à-vis du jeton d'identification, accès en lecture (316) de l'ordinateur fournisseur d'identification vers l'au moins un attribut stocké dans le jeton d'identification pour la transmission de l'au moins un attribut à un autre ordinateur après sa signature.

2. Procédé selon la revendication 1, où l'exécution du protocole d'authentification à divulgation nulle de connaissance comprend :
- une première exécution d'un échange de clés de Diffie-Hellman (DH I) moyennant l'emploi du secret statistique (128) par le jeton d'identification et par le terminal pour la création d'un premier point de base temporaire partagé (B') ;
- une deuxième exécution d'un échange de clés de Diffie-Hellman (DH II) moyennant l'emploi du premier point de base temporaire partagé (B'), où la deuxième exécution comprend la création de la première clé cryptographique publique (OS_IDT2) et d'une deuxième clé cryptographique publique (OS_T2) moyennant la prise en compte du secret statistique (128) et l'échange des première et deuxième clés cryptographiques publiques entre le terminal et le jeton d'identification ; et
- l'établissement d'un premier canal de transmission de données sécurisé (V1) entre le jeton d'identification et le terminal moyennant l'emploi des première et deuxième clés cryptographiques publiques ; et
- la dérivation d'une clé d'authentification (AuS) à partir de la première clé cryptographique publique (OS_IDT2) par le terminal et
- l'emploi de la clé d'authentification par le terminal pour l'authentification de l'utilisateur vis-à-vis du jeton d'identification par le biais de la première liaison sécurisée.

3. Procédé selon la revendication 2, où les première et deuxième clés cryptographiques publiques sont des clés reliées à des sessions.

4. Procédé selon la revendication 2 ou 3,
où l'exécution du protocole d'authentification à divulgation nulle de connaissance comprend :
- la transmission de paramètres de domaine (B), lesquels forment une courbe elliptique, à partir du jeton d'identification jusqu'au terminal, où les paramètres de domaines contiennent un point de base statistique (B) de la courbe elliptique ;
- la création d'une valeur aléatoire (s) par le jeton d'identification ;
- le cryptage de la valeur aléatoire (s) à l'aide du secret statistique stocké dans le jeton d'identification (PIN) moyennant la création d'une valeur aléatoire cryptée (Enc(s)) ;
- la transmission de la valeur aléatoire cryptée (Enc(s)) du jeton d'identification vers le terminal ;
- l'emploi du secret statistique (PIN) indiqué par l'utilisateur par le biais du terminal pour le décryptage de la valeur aléatoire cryptée (Enc(s)) pour la reconstruction de la valeur aléatoire (s) par le terminal ;
- la création d'une première clé de jeton privée (PS_IDT1) par le jeton d'identification ;
- la dérivation d'une première clé de jeton publique (OS_IDT1) à partir de la première clé de jeton privée (PS_IDT1) et du point de base par le jeton d'identification, où la première clé de jeton privée et la première clé de jeton publique forment une paire asymétrique de clés cryptographiques ;
- la transmission de la première clé de jeton publique (OS_IDT1) du jeton d'identification vers le terminal au cours du premier échange de clés de Diffie-Hellman ;
- la création d'une première clé de terminal privée (PS_T1) par le terminal ;
- la dérivation d'une première clé de terminal publique (OS_T1) à partir de la première clé de terminal privée et du point de base statistique (B) par le terminal, où la première clé de terminal privée (PS_T1) et la première clé de terminal publique (OS_T1) forment une paire asymétrique de clés cryptographiques ;
- la transmission de la première clé de terminal publique du terminal vers le jeton d'identification au cours du premier échange de clés de Diffie-Hellman ;
- le calcul d'un point d'interdiction (BL) à partir de la première clé de terminal privée et de la première clé de jeton publique par le terminal ;
- le calcul du premier point de base temporaire partagé (B') à partir de la valeur aléatoire (s), du point de base statistique (B) et du point d'interdiction (BL) par le terminal ;
- le calcul du point d'interdiction (BL) à partir de la première clé de jeton privée (PS_IDT1) et de la première clé de terminal publique (OS_T1) par le jeton d'identification ;
- le calcul du premier point de base temporaire partagé (B') à partie de la valeur aléatoire (s), du point de base statistique (B) et du point d'interdiction (BL) par le jeton d'identification ;
- la création d'une deuxième clé de terminal privée (PS_T2) par le terminal ;
- la dérivation d'une deuxième clé de terminal publique (OS_T2) à partir de la deuxième clé de terminal privée et du premier point de base temporaire partagé (B') par le terminal, où la deuxième clé de terminal privée et la deuxième clé de terminal publique forment une paire asymétrique de clés cryptographiques ;
- la transmission de la deuxième clé de terminal publique (OS_T2) du terminal vers le jeton d'identification au cours du deuxième échange de clés de Diffie-Hellman (DH II) ;
- la création d'une deuxième clé de jeton privée (PS_IDT2) par le jeton d'identification ;
- la dérivation d'une deuxième clé de jeton publique (OS_IDT2) à partir de la deuxième clé de jeton privée (PS_IDT2) et du premier point de base temporaire partagé (B') par le jeton d'identification, où la deuxième clé de jeton publique et la deuxième clé de jeton privée forment une paire asymétrique de clés cryptographiques ;
- la transmission de la deuxième clé de jeton publique (OS_IDT2) du jeton d'identification vers le terminal, où la deuxième clé de jeton publique (OS_IDT2) sert de première clé publique qui est employée en tant qu'identité de jeton d'identification ;
- le calcul d'une clé de session (SSYM, SIS) à partir de la deuxième clé de jeton publique et de la deuxième clé de terminal publique par le jeton d'identification ;
- le calcul de la clé de session (SSYM, SIS) à partir de la deuxième clé de jeton publique et de la deuxième clé de terminal publique par le terminal ;
- le calcul de la clé d'authentification (AuS) à partir de la clé de session (SSYM) par le jeton d'identification dans la fonction d'une valeur de référence ;
- l'emploi de la clé de session (SSYM, SiS) respectivement par le terminal et le jeton d'identification pour l'établissement de la première liaison sécurisée ; et
- l'emploi de la clé d'authentification (AuS) pour l'authentification du terminal vis-à-vis du jeton d'utilisation.

5. Procédé selon l'une des revendications précédentes, où l'authentification de l'ordinateur fournisseur d'identification vis-à-vis du jeton d'identification est effectuée à l'aide d'un certificat de l'ordinateur fournisseur d'identification, où le certificat contient une indication concernant les attributs stockés dans le jeton d'identification pour lesquels l'ordinateur fournisseur d'identification a un accès en lecture.

6. Procédé selon l'une des revendications précédentes, où l'authentification de l'ordinateur fournisseur d'identification vis-à-vis du jeton d'identification comprend :
- l'envoi d'un certificat de l'ordinateur fournisseur d'identification, lequel contient une clé publique statistique (OSS) de l'ordinateur fournisseur d'identification, de l'ordinateur fournisseur d'identification vers le jeton d'identification par le biais du terminal ;
- la vérification du certificat par le jeton d'identification ;
- la création d'une valeur de vérification (r) par le jeton d'identification ;
- l'envoi de la valeur de vérification du jeton d'identification vers l'ordinateur fournisseur d'identification par le biais du terminal ;
- la création d'une valeur intermédiaire (r_{SIGN}) laquelle est dérivée au moins de la valeur de vérification et de l'identité de jeton d'identification par l'ordinateur fournisseur d'identification ;
- la signature de la valeur intermédiaire avec une clé cryptographique privée statistique (PSS) de l'ordinateur fournisseur d'identification pour la création d'une valeur signée (r_{SIGN}), où la clé privée statistique forme une paire asymétrique de clés cryptographiques avec la clé publique statistique (OSS) du certificat ;
- la transmission de la valeur signée (r_{SIGN}) de l'ordinateur fournisseur d'identification vers le jeton d'identification par le biais du terminal ;
- la vérification de signature de la valeur signée par le jeton d'identification à l'aide de la clé publique statistique (OSS) du certificat.

7. Procédé selon la revendication 6, en outre avec
- le calcul d'une valeur comprimée à partir de l'identité de jeton d'identification par l'ordinateur fournisseur d'identification ;
- la concaténation de la valeur comprimée avec la valeur de vérification (r) et l'identité de jeton d'identification pour la création de la valeur intermédiaire.

8. Procédé selon l'une des revendications précédentes, en outre avec :
- après l'authentification réussie de l'ordinateur fournisseur d'identification vis-à-vis du jeton d'identification, l'établissement d'une liaison sécurisée (V3) entre l'ordinateur fournisseur d'identification et le jeton d'identification par le biais du terminal, où la liaison sécurisée est basée sur un cryptage de bout en bout, et où l'au moins un attribut est lu par le jeton d'identification par le biais de la liaison sécurisée et est transmis à l'ordinateur fournisseur d'identification.

9. Procédé selon l'une des revendications précédentes, où, dans le cas du jeton d'identification, il s'agit d'un élément de sécurité (210) lequel est intégré dans un appareil de télécommunication mobile (208), où les étapes de procédé exécutées par le terminal sont exécutées par un programme d'application, où le programme d'application est exécuté sur un processeur d'un appareil radio mobile.

10. Procédé selon l'une des revendications précédentes, où, dans le cas du secret statistique, il s'agit d'un des objets suivants : un PIN ; un CAN ; un mot de passe ; ou une caractéristique biométrique de l'utilisateur.

11. Procédé selon l'une des revendications précédentes,
- où le jeton d'identification fait intégralement partie d'un document (214), où le document dispose d'un Pin-pad (262) intégré, où le document dispose d'une puce (260), où la puce sert de terminal ; ou
- où le jeton d'identification fait intégralement partie d'un appareil radio mobile, où l'appareil radio mobile dispose d'un clavier (272) intégré, où une application exécutée sur le processeur de l'appareil radio mobile qui est inter-opérationnelle avec le jeton d'identification, sert de terminal ;
comprenant en outre :
- la réception du secret statistique par le jeton d'identification sous la forme d'une valeur indiquée manuellement par le biais du clavier ou par l'utilisateur par le biais du PIN-pad ;
- la comparaison du secret statistique indiqué manuellement par le jeton d'identification avec la valeur de référence du secret statistique stockée dans le jeton d'identification pour l'authentification de l'utilisateur.

12. Procédé selon l'une des revendications précédentes 1 à 10,
- où le jeton d'identification fait intégralement partie d'un document (214), où le document dispose d'un Pin-pad (262) intégré, où le document dispose d'une puce (260) avec une mémoire intégrée, dans laquelle le secret statistique est stocké, où la puce sert de terminal ; ou
- où le jeton d'identification fait intégralement partie d'un appareil radio mobile (208), où l'appareil radio mobile dispose d'un clavier intégré et contient une mémoire intégrée, dans laquelle le secret statistique est stocké, où une application exécutée sur le processeur de l'appareil radio mobile qui est inter-opérationnelle avec le jeton d'identification, sert de terminal ;
comprenant en outre :
- l'indication du secret statistique stocké dans la mémoire intégrée et/ou une question de confirmation concernant une indication (268) ;
- la réception d'un signal de confirmation de l'utilisateur par le terminal, que le secret statistique doit être transmis du terminal vers le jeton d'identification ;
- dans le cas de la réception du signal de confirmation, l'exécution de la transmission du secret statistique par le biais de l'interface dotée de contacts.

13. Terminal (102) avec
- une mémoire de données qui est couplée de manière opérationnelle au terminal ;
- des moyens pour la réception d'un secret statistique indiqué manuellement par un utilisateur d'un jeton d'identification et/ou des moyens pour la lecture du secret statistique par la mémoire de données ;
- une interface sans contacts (134) pour l'échange de données avec un jeton d'identification (104) ;
- une interface dotée de contacts (118) pour l'échange de données avec un jeton d'identification ;
- des moyens (115) pour faire la constatation si une interface dotée de contacts du jeton d'identification est présente et peut être mise à contribution avec le terminal pour l'échange de données ;
- des moyens (116) pour l'authentification de l'utilisateur vis-à-vis du jeton d'identification ;
où le terminal est conçu pour, dans le cas de la constatation (302) que le jeton d'identification ne possède pas l'interface dotée de contacts ou que celle-ci ne peut pas être mise à contribution, exécuter les étapes suivantes :
• exécution (308) d'un protocole d'authentification à divulgation nulle de connaissance par le biais d'une interface sans contact pour apporter une preuve vis-à-vis du jeton d'identification que le terminal est en possession du secret statistique (128), sans transmettre ce secret statistique au jeton d'identification, où le secret statistique est un secret partagé entre l'utilisateur et le jeton d'identification, où l'exécution comprend une création d'une première clé cryptographique publique (OS_IDT2) par le jeton d'identification et où l'exécution du protocole d'authentification à divulgation nulle de connaissance comprend l'authentification de l'utilisateur vis-à-vis du jeton d'identification par le biais de l'interface sans contact ; et
• dérivation (310) d'une identité de jeton d'identification (OS_IDT2, 400, 500, 604) par le terminal à partir de la première clé cryptographique publique (OS_IDT2) ;
dans le cas d'une constatation (302) que le jeton d'identification possède l'interface dotée de contacts et que celle-ci peut être mise à contribution :
• authentification (304) de l'utilisateur vis-à-vis du jeton d'identification par la transmission du secret statistique (128) indiqué ou lu à partir du terminal vers le jeton d'identification par le biais de l'interface dotée de contacts ;
• accès (306) à une identité de jeton d'identification (OS_IDT2, 400, 500, 604) par le terminal, où l'accès comprend :
° la lecture d'une valeur de donnée qui est déjà présente stockée dans une mémoire (114) du terminal avant la constatation, à partir de cette mémoire, où la valeur de donnée est également présente stockée dans une mémoire du jeton d'identification avant la constatation, et l'utilisation de la valeur de donnée en tant qu'identité de jeton d'identification par le terminal et par le jeton d'identification ; ou
° en réponse à la constatation, la création d'une valeur de donnée par le terminal, la transmission de la valeur de donnée du terminal vers le jeton d'identification et l'utilisation de la valeur de donnée créée en tant qu'identité de jeton d'identification par le terminal et par le jeton d'identification ; ou
° la réception d'une valeur de donnée du jeton d'identification, par le terminal et l'utilisation de la valeur de donnée créée en tant qu'identité de jeton d'identification par le terminal et le jeton d'identification ;
- envoi (312) de l'identité de jeton d'identification (OS_IDT2, 400, 500, 604) à partir du terminal vers l'ordinateur fournisseur d'identification (502).

14. Support de mémoire (114) avec des instructions pouvant être interprétées par ordinateur, où le support de mémoire peut être couplé de manière opérationnelle à un terminal (102) et où une exécution des instructions par un processeur (110) provoque l'exécution du procédé suivant :
- réception d'un secret statistique (128) indiqué manuellement par un utilisateur d'un jeton d'identification (104) ou lecture du secret statistique à partir d'un support de mémoire couplé de manière opérationnelle au terminal ;
- constatation (302) qu'une interface dotée de contacts du jeton d'identification est présente et peut être mise à contribution pour l'échange de données avec le terminal ;
dans le cas de la constatation que le jeton d'identification ne possède pas l'interface dotée de contacts ou que celle-ci ne peut pas être mise à contribution :
• exécution (308) d'un protocole d'authentification à divulgation nulle de connaissance par le biais d'une interface sans contact du terminal et du jeton d'identification pour apporter une preuve vis-à-vis du jeton d'identification que le terminal est en possession d'un secret statistique (128), sans transmettre ce secret statistique au jeton d'identification, où le secret statistique est un secret partagé entre l'utilisateur et le jeton d'identification, où l'exécution comprend une création d'une première clé cryptographique publique (OS_IDT2) par le jeton d'identification et où l'exécution du protocole d'authentification à divulgation nulle de connaissance comprend l'authentification de l'utilisateur vis-à-vis du jeton d'identification par le biais de l'interface sans contact ; et
• dérivation (310) d'une identité de jeton d'identification (OS_IDT2, 400, 500, 604) à partir de la première clé cryptographique publique (OS_IDT2) ;
dans le cas d'une constatation que le jeton d'identification possède l'interface dotée de contacts et que celle-ci peut être mise à contribution :
• authentification (304) de l'utilisateur vis-à-vis du jeton d'identification par la transmission du secret statistique (128) indiqué ou lu vers le jeton d'identification par le biais de l'interface dotée de contacts ;
• accès (306) à une identité de jeton d'identification (OS_IDT2, 400, 500, 604) par le terminal, où l'accès comprend :
° la lecture d'une valeur de donnée qui est déjà présente stockée dans une mémoire (114) du terminal avant la constatation, à partir de cette mémoire, où la valeur de donnée est également présente stockée dans une mémoire du jeton d'identification avant la constatation, et l'utilisation de la valeur de donnée en tant qu'identité de jeton d'identification (IDPICC) par le terminal et par le jeton d'identification ; ou
° en réponse à la constatation, la création d'une valeur de donnée par le terminal, la transmission de la valeur de donnée du terminal vers le jeton d'identification et l'utilisation de la valeur de donnée créée en tant qu'identité de jeton d'identification (IDPICC) par le terminal et par le jeton d'identification ; ou
° la réception d'une valeur de donnée du jeton d'identification par le terminal et l'utilisation (IDPICC) par le terminal et le jeton d'identification ;
- envoi (312) de l'identité de jeton d'identification (OS_IDT2, 400, 500, 604) à partir du terminal vers un ordinateur fournisseur d'identification.
